# EUROPÄISCHE PATENTSCHRIFT

(11) **EP 3 377 379 B1**
(45) Veröffentlichungstag und Bekanntmachung des Hinweises auf die Patenterteilung: **14.08.2019**
(21) Anmeldenummer: 16798099.4
(22) Anmeldetag: 03.11.2016
(51) Int. Cl.: B60W 20/20, B60W 50/08, B60W 10/06, B60W 10/08, B60K 6/442

(54) **VERFAHREN ZUM STEUERN EINER ANTRIEBSEINRICHTUNG EINES HYBRIDFAHRZEUGES UND HYBRIDFAHRZEUG**
METHOD FOR CONTROLLING A DRIVE DEVICE OF A HYBRID VEHICLE AND HYBRID VEHICLE
PROCÉDÉ DE COMMANDE D'UN DISPOSITIF D'ENTRAÎNEMENT D'UN VÉHICULE HYBRIDE ET VÉHICULE HYBRIDE

(30) Priorität: 17.11.2015 DE 102015222691
(43) Veröffentlichungstag der Anmeldung: 26.09.2018
(73) Patentinhaber: Volkswagen Aktiengesellschaft, 38440 Wolfsburg (DE)
(72) Erfinder: FELSCH, Dr. Christian, 38104 Braunschweig (DE); RIELING, Dr. Jörg, 38116 Braunschweig (DE); ZILLMER, Dr. Michael, 38173 Sickte (DE)
(86) Internationale Anmeldenummer: PCT/EP2016/076580
(87) Internationale Veröffentlichungsnummer: WO 2017/084887

(56) Entgegenhaltungen:
- EP-A1- 2 636 567
- EP-A1- 2 733 034
- JP-A- 2015 178 360
- US-A1- 2013 013 137

## Beschreibung

Die vorliegende Anmeldung betrifft ein Verfahren zum Steuern einer Antriebseinrichtung eines Hybridfahrzeuges und ein Hybridfahrzeug mit einer Antriebseinrichtung und einer Antriebseinrichtungssteuerung, die ausgebildet ist, das Verfahren auszuführen.

Aus der deutschen Offenlegungsschrift DE 10 2013 001 095 A1 ist ein Verfahren zum Betreiben einer Hybridantriebseinrichtung bekannt, wobei die Hybridantriebseinrichtung eine mit einer ersten Achse des Kraftfahrzeugs wirkverbindbare Brennkraftmaschine, einen ebenfalls mit der ersten Achse wirkverbindbaren ersten Elektromotor sowie einen mit einer zweiten Achse des Kraftfahrzeugs wirkverbindbaren zweiten Elektromotor aufweist. Die zum Betreiben des zweiten Elektromotors verwendete elektrische Energie wird von dem von der Brennkraftmaschine unter Anhebung ihrer Leistung angetriebenen ersten Elektromotor erzeugt oder wird ausschließlich einem Energiespeicher für elektrische Energie entnommen.

Das europäische Patent EP 1 074 087 B1 offenbart ein Regelverfahren und eine Vorrichtung für die Brennkraftmaschine eines elektrischen Hybridfahrzeuges, wobei ein elektrischer Motor oder Motor/Generator zwischen der Maschine und dem kontinuierlichen variablen oder automatischen Getriebe angeordnet ist und wobei das Hybridfahrzeug eine Batterie und zugeordnete Steuerelemente aufweist. Dabei hält ein Steuermittel die Leistungsausgabe der Brennkraftmaschine im Wesentlichen entlang einer idealen Betriebslinie, wenn sich die Geschwindigkeit der Maschine ändert. Ein zweiter Elektromotor kann ferner vorgesehen sein und die Drehmomentausgabe des zweiten Elektromotors kann mittels einer Systemsteuerung variiert werden.

Die deutsche Offenlegungsschrift DE 10 2012 103 292 A1 offenbart ein Verfahren zum Betrieb eines elektrischen Antriebstranges eines Fahrzeuges, wobei mindestens zwei Elektromotoren, die jeweils mit einer Antriebsachse in Wirkverbindung stehen, und eine Steuereinrichtung vorgesehen sind, wobei ein Fahrerwunschmoment für einen motorischen oder generatorischen Betrieb ermittelt wird, und wobei bei einer vorliegenden Abtriebsdrehzahl eine erforderliche Gesamtleistung des elektrischen Abtriebstranges ermittelt wird, und wobei die Leistungen der einzelnen Elektromotoren ermittelt werden, und wobei die sich ergebenden Verlustleistungen der einzelnen Elektromotoren auf Basis von hinterlegten Verlustleistungskennfeldern für die einzelnen Elektromotoren minimiert werden.

Die deutsche Offenlegungsschrift DE 10 2009 019 485 A1 offenbart einen Antriebstrang mit einem ersten Elektromotor und einem Planetengetriebe und Fahrzeuge, die diesen Antriebstrang aufweisen. Der Antriebstrang weist eine erste elektrische Maschine, welche in einem motorischen oder generatorischen Betriebszustand betreibbar ist, und ein Planetengetriebe mit einer Drehzahländerungsvorrichtung auf, wobei das Planetengetriebe eine An- und eine Abtriebsseite aufweist und wobei die erste elektrische Maschine im motorischen oder generatorischen Betriebszustand steuernd in die Drehzahländerungsvorrichtung eingreift, so dass sich ein Übersetzungsverhältnis im Planetengetriebe ausbildet. Über die erste elektrische Maschine wird das Übersetzungsverhältnis des Planetengetriebes beeinflusst, wodurch zusätzlich auch der Arbeitspunkt der Verbrennungsmaschine bestimmt wird. Die Verbrennungskraftmaschine wird nahe ihres optimalen Wirkungsgrades betrieben. In einem rein elektrischen Betrieb arbeitet die zweite elektrische Maschine als Motor und die erste elektrische Maschine befindet sich im Leerlauf oder wird als Zusatzantrieb genutzt. Ein Teil der von der Verbrennungsmaschine erzeugten mechanischen Energie wird durch die erste elektrische Maschine in elektrische Energie umgewandelt und direkt an die zweite elektrische Maschine weitergeleitet. Beschleunigungen werden von der zweiten elektrischen Maschine unterstützt. Bei einer Verzögerung kann durch Rekuperation der Bremsenergie der Energiespeicher geladen werden.

Die Übersetzung der europäischen Patentschrift DE 602 23 850 T2 offenbart ein Verfahren zum Betrieb eines Antriebsystems eines Hybridfahrzeuges, wobei das Hybridfahrzeug eine Brennkraftmaschine, einen ersten Elektromotor/Generator, einen Planetengetriebemechanismus und einen zweiten Elektromotor/Generator umfasst. Ein Verhältnis zwischen einem ersten Moment, das durch die Brennkraftmaschine bei den Fahrzeugachsen erzeugt wird, und einem zweiten Moment, das durch den zweiten Elektromotor bei den Fahrzeugachsen bei jeder Zahnradposition der Übersetzung erzeugt wird, wird von einem ersten Verhältnis, wenn sowohl die Brennkraftmaschine als auch der zweite Elektromotor normal arbeiten, auf ein zweites Verhältnis, wenn entweder die Brennkraftmaschine oder der zweite Elektromotor gestört sind, geändert.

Die deutsche Offenlegungsschrift DE 10 2007 054 368 A1 offenbart eine Steuerarchitektur zur Auswahl eines optimalen Modus oder einer optimalen Übersetzung und Antriebsdrehzahl für ein Hybridantriebstrangsystem, welches eine Brennkraftmaschine, einen ersten und einen zweiten Elektromotor und ein elektromechanisches Getriebe umfasst, das selektiv betreibbar ist, um Drehmoment dazwischen zu übertragen und in mehreren Modi mit fester Übersetzung und stufenlos verstellbaren Modi betreibbar ist. Für jeden zulässigen Betriebsbereichszustand werden bevorzugte Betriebsbedingungen und bevorzugte Kosten bestimmt und darauf basierend ein bevorzugter Betriebsbereichszustand ausgewählt. Eine Kostenstrukturinformation, die in ein strategisches Managementeinrichtungssegment eingegeben und in einem Optimierungssegment verwendet wird, umfasst vorzugsweise Betriebskosten, die allgemein auf der Basis von Faktoren bestimmt werden, die mit den Fahrzeugfahreigenschaften, der Kraftstoffwirtschaftlichkeit, Emissionen und Batterielebensdauer für den bestimmten Drehmomentbereich in Beziehung stehen. Darüber hinaus werden Kosten in einem Kraftstoff- und elektrischen Energieverbrauch, die zu dem spezifischen Betriebspunkt des Antriebstrangsystems für das Fahrzeug gehören, zugewiesen und zugeordnet. Die optimalen Betriebskosten können bestimmt werden, indem ein Gesamtantriebstrangsystemverlust berechnet wird, welcher einen Ausdruck auf der Basis des Maschinenleistungsverlustes, der durch Kraftstoffwirtschaftlichkeit und Abgasemissionen angetrieben ist, plus Verlusten in dem mechanischen System, Verlusten in dem elektrischen System und Wärmeverluste umfasst.

Die europäische Offenlegungsschrift EP 2 636 567 A1 offenbart eine Fahrzeugsteuervorrichtung, die dazu eingerichtet ist, wahlweise einen ersten Fahrzustand herzustellen, in dem eine Fahrzeugantriebskraft primär von einem zweiten Motor/Generator erzeugt wird, der mit elektrischer Energie betrieben wird, die von einer Elektroenergiespeichervorrichtung bereitgestellt wird, während eine Maschine in einen Ruhezustand versetzt ist, oder einen zweiten Fahrzustand, in dem ein erster Motor/Generator mit einer Antriebskraft der Maschine betrieben wird, um elektrische Energie zu erzeugen, und in dem die Fahrzeugantriebskraft primär vom zweiten Motor/Generator erzeugt wird, der mit wenigstens der elektrischen Energie betrieben wird, die vom ersten Motor/Generator erzeugt wird. Die Fahrzeugsteuervorrichtung ist weiter derart eingerichtet, dass die Fahrzeugantriebskraft, die im zweiten Fahrzustand bei einem gegebenen Wert eines Betätigungsbetrags eines Beschleunigungspedals erzeugt wird, größer ist als diejenige, die im ersten Fahrzustand erzeugt wird. Deshalb wird die Ausgangscharakteristik so eingestellt, dass die Fahrzeugantriebskraft, die primär vom Elektromotor in dem Fahrzustand erzeugt wird, in dem die Maschine in den Betriebszustand versetzt ist, größer ist als diejenige, die in dem Fahrzustand erzeugt wird, in dem die Fahrzeugantriebskraft nur vom Elektromotor erzeugt wird, sodass der Fahrzeugführer, der ein Betriebsgeräusch der Maschine hört, ein Fahrverhalten des Fahrzeugs fühlen kann, wie es vom Betriebsgeräusch erwartet wird.

Ein aus dem Stand der Technik bekanntes Hybridfahrzeug kann durch verschiedene Antriebsaggregate der Antriebseinrichtung angetrieben werden. Ein Antreiben des Hybridfahrzeuges mit dem einen oder dem anderen Antriebsaggregat kann z. B. hinsichtlich eines Energieverbrauchs vorteilhaft sein, jedoch negative Konsequenzen hinsichtlich einer Leistungsfähigkeit des Hybridfahrzeuges zur Folge haben. Eine Auswahl, mittels welches Antriebsaggregats das Hybridfahrzeug in einer gegebenen Fahrsituation angetrieben werden sollte, ist somit im Stand der Technik mit Schwierigkeiten behaftet.

Eine Aufgabe der vorliegenden Erfindung ist es, ein Verfahren zum Steuern einer Antriebseinrichtung eines Hybridfahrzeuges sowie ein Hybridfahrzeug bereitzustellen, wobei in dem Stand der Technik auftretende Probleme vermindert sind, wobei insbesondere ein Energieverbrauch vermindert wird, während gleichzeitig einem Fahrerwunsch Rechnung getragen wird.

Die Aufgabe wird durch die Gegenstände gemäß den unabhängigen Ansprüchen gelöst, das heißt durch ein Verfahren zum Steuern einer Antriebseinrichtung eines Hybridfahrzeuges und durch ein Hybridfahrzeug gemäß den unabhängigen Ansprüchen.

Gemäß einer Ausführungsform der vorliegenden Erfindung ist ein Verfahren zum Steuern einer Antriebseinrichtung eines Hybridfahrzeuges, die eine Verbrennungskraftmaschine, eine erste Elektromaschine, eine zweite Elektromaschine und einen Akkumulator umfasst, wobei für die Antriebsvorrichtung ein leistungsorientierter Modus oder ein verbrauchsorientierter Modus auswählbar ist,
wobei das Verfahren bei gewähltem verbrauchsorientierten Modus im Falle einer ersten Bedingung aufweist:
Steuern der Antriebseinrichtung in einem parallelen Boost-Hybridbetrieb, in dem die Verbrennungskraftmaschine und zusätzlich die erste Elektromaschine und/oder die zweite Elektromaschine ein Fahrantriebsdrehmoment bewirkt, bis ein Kriterium erfüllt ist, das von der Zeitdauer des Betreibens und/oder dem Energieumsatz in dem parallelen Boost-Hybridbetrieb abhängt, und
falls das Kriterium erfüllt ist, Wechseln in einen seriellen Hybridbetrieb, in dem das Fahrantriebsdrehmoment mittels der zweiten Elektromaschine bewirkt wird und die Verbrennungskraftmaschine die erste Elektromaschine zur Erzeugung von elektrischer Energie antreibt,
wobei das Verfahren bei gewähltem leistungsorientierten Modus im Falle der ersten Bedingung aufweist:
   Steuern der Antriebseinrichtung in dem seriellen Hybridbetrieb, ohne das Erfüllen des Kriteriums abzuwarten,
   wobei die erste Bedingung aufweist:
   ein Sollantriebswert wird auf einen Zwischenwert erhöht, der zwischen
   einer Verbrennungskraftmaschine-Schwelle, die einen maximalen Antriebswert in einem parallelen Hybridbetrieb repräsentiert, in dem ausschließlich die Verbrennungskraftmaschine ein Fahrantriebsdrehmoment bewirkt, und
   einer Parallelhybridbetrieb-Schwelle, die einen maximalen Antriebswert in dem parallelen Boost-Hybridbetrieb repräsentiert, liegt.

Das Verfahren kann in Software- und/oder Hardware implementiert sein. Insbesondere kann das Verfahren mittels einer Antriebseinrichtungssteuerung und/oder eines Motorsteuergeräts, welches insbesondere in dem Hybridfahrzeug umfasst ist, durchgeführt werden. Insbesondere kann das Verfahren durch ein computerimplementiertes Verfahren durchgeführt werden. Dazu kann ein Programmcode mit Anweisungen in einen Speicher eines arithmetischen/logischen Prozessors geladen und von dem Prozessor ausgeführt werden.

Die Verbrennungskraftmaschine kann einen Dieselmotor oder einen Ottomotor umfassen und ferner einen Kraftstofftank, aus dem Kraftstoff Verbrennungsräumen der Verbrennungskraftmaschine zugeführt werden kann. Die erste Elektromaschine und/oder die zweite Elektromaschine können Synchronmaschinen umfassen, welche mit Permanentmagneten (im Rotor) ausgestattet sein können. Die erste Elektromaschine kann im Wesentlichen im generatorischen Modus betrieben werden, in dem die erste Elektromaschine von der Verbrennungskraftmaschine angetrieben wird und elektrische Energie erzeugt, welche dem Akkumulator und/oder der zweiten Elektromaschine zugeführt wird. Die erste Elektromaschine kann auch im elektromotorischen Betrieb eingesetzt werden. Die zweite Elektromaschine kann im Wesentlichen im elektromotorischen Betrieb eingesetzt werden, wobei die zweite Elektromaschine elektrische Energie von dem Akkumulator und/oder der ersten Elektromaschine bezieht und ein mechanisches Antriebsmoment erzeugt. Die zweite Elektromaschine kann auch im generatorischen Modus betrieben werden.

Die Antriebseinrichtung kann zum Antrieb des Hybridfahrzeuges im Wesentlichen in einem rein elektrischen Betrieb, in dem parallelen Hybridbetrieb oder dem seriellen Hybridbetrieb betrieben werden.

In dem rein elektrischen Betrieb kann ein Antriebsmoment an Antriebsrädern des Hybridfahrzeuges von der zweiten Elektromaschine (und/oder von der ersten Elektromaschine) erzeugt werden, während die Verbrennungskraftmaschine nicht zu einem mechanischen Antriebsmoment beitragen muss.

In dem parallelen Hybridbetrieb kann die Verbrennungskraftmaschine ausschließlich das Fahrantriebsdrehmoment bewirken, ohne dass die erste Elektromaschine oder die zweite Elektromaschine zum Antriebsdrehmoment beiträgt. In dem parallelen Boost-Hybridbetrieb kann insbesondere die Verbrennungskraftmaschine und die erste Elektromaschine das Fahrantriebsmoment bewirken, ohne dass die zweite Elektromaschine dazu beiträgt. In dem parallelen Boost-Hybridbetrieb kann auch insbesondere die Verbrennungskraftmaschine und die zweite Elektromaschine das Fahrantriebsmoment bewirken, ohne dass die erste Elektromaschine dazu beiträgt. In dem parallelen Boost-Hybridbetrieb kann ferner auch insbesondere die Verbrennungskraftmaschine und die erste Elektromaschine und die zweite Elektromaschine das Fahrantriebsmoment bewirken.

In dem seriellen Hybridbetrieb kann die Verbrennungskraftmaschine die erste Elektromaschine antreiben, welche im generatorischen Betrieb elektrische Energie erzeugt, wobei die so erzeugte elektrische Energie der zweiten Elektromaschine zugeführt wird, um das Antriebsmoment zu bewirken.

Ein/e Fahrer/Fahrerin des Hybridfahrzeuges kann entweder den leistungsorientierten Modus oder den verbrauchsorientierten Modus z. B. mittels eines Hebels, eines Schalters, auf einem Berührschirm oder auf andere Weise auswählen. Der leistungsorientierte Modus oder der verbrauchsorientierte Modus kann z. B. manuell oder mit dem Fuß von einem Fahrer oder einer Fahrerin ausgewählt werden und/oder er kann aufgrund äußerer Nebenbedingungen oder aus anderen Gründen in einem Motorsteuergerät oder in einer Antriebseinrichtungssteuerung gesetzt werden. Der leistungsorientierte Modus kann auch als ein Sport-Modus bezeichnet werden und der verbrauchsorientierte Modus kann auch als ein Öko-Modus bezeichnet werden.

Wenn der verbrauchsorientierte Modus ausgewählt ist, kann die Antriebseinrichtung länger (z. B. während mehr Fahrsituationen, unter einer größerer Menge von Bedingungen) in dem parallelen Hybridbetrieb und/oder dem parallelen Boost-Hybridbetrieb betrieben werden, als bei gewähltem leistungsorientiertem Modus. Da der parallele Hybridbetrieb und/oder der Boost-Hybridbetrieb einen geringeren Energiebedarf haben kann (unter bestimmten Nebenbedingungen, insbesondere bis das Kriterium erfüllt ist), kann damit im verbrauchsorientierten Modus (relativ zum leistungsorientierten Modus) Energie eingespart werden. Der serielle Hybridbetrieb kann aufgrund der zweifachen Energiewandlung in der Regel einen höheren Energieverbrauch haben als der parallele Hybridbetrieb und auch, unter bestimmten Bedingungen, als der parallele Boost-Hybridbetrieb. Der serielle Hybridbetrieb kann jedoch ein höheres Antriebsdrehmoment und/oder eine höhere Antriebsleistung als der parallele Hybridbetrieb und/oder der Boost-Hybridbetrieb bereitstellen, so dass ein sportliches Fahren ermöglicht ist.

Die Verbrennungskraftmaschine-Schwelle kann z. B. eine Verbrennungskraftmaschine-Drehmomentschwelle und/oder eine Verbrennungskraftmaschine-Leistungsschwelle repräsentieren. Die Verbrennungskraftmaschine-Schwelle kann z. B. von einer Fahrgeschwindigkeit und/oder von einer Drehzahl der Verbrennungskraftmaschine abhängen. Z. B. kann die Verbrennungskraftmaschine-Schwelle (insbesondere im Wesentlichen und/oder über einen gewissen Bereich) mit der Fahrgeschwindigkeit und/oder der Drehzahl der Verbrennungskraftmaschine ansteigen. Die Antriebseinrichtung kann in dem parallelen Hybridbetrieb betrieben werden, wenn die Fahrgeschwindigkeit und/oder eine Antriebsraddrehzahl oberhalb einer Fahrgeschwindigkeitsschwelle und/oder einer Antriebsraddrehzahlschwelle liegt und wenn gleichzeitig der Sollantriebswert unterhalb der Verbrennungskraftmaschine-Schwelle liegt. In dem parallelen Hybridbetrieb kann z. B. ausschließlich die Verbrennungskraftmaschine das Fahrantriebsdrehmoment und/oder die Fahrantriebsleistung bewirken. Der parallele Hybridbetrieb kann der energieeffizienteste Betriebsmodus der Antriebseinrichtung sein.

Unterhalb der Fahrgeschwindigkeitsschwelle und wenn ferner der Sollantriebswert unterhalb einer Elektrischer-Betrieb-Schwelle liegt, kann der rein elektrische Betrieb durchgeführt werden, indem (praktisch) ausschließlich die zweite Elektromaschine das Antriebsdrehmoment und/oder die Antriebsleistung erzeugt und auf das Antriebsrad und/oder mehrere Antriebsräder überträgt. Unabhängig von der Fahrgeschwindigkeit kann der rein elektrische Betrieb durchgeführt werden, falls der Sollantriebswert unterhalb einer weiteren Elektrischer-Betrieb-Schwelle liegt, die kleiner sein kann als die Elektrischer-Betrieb-Schwelle.

Wenn die Fahrgeschwindigkeit und/oder eine Antriebsraddrehzahl oberhalb einer Fahrgeschwindigkeitsschwelle und/oder einer Antriebsraddrehzahlschwelle liegt und wenn gleichzeitig der Sollantriebswert oberhalb der Parallelhybridbetrieb-Schwelle liegt, kann die Antriebseinrichtung im seriellen Betriebsmodus betrieben werden, in dem die Verbrennungskraftmaschine nicht (unmittelbar über eine direkte mechanische Kopplung) zu dem Antriebsdrehmoment und/oder der Antriebsleistung beiträgt, jedoch zumindest die zweite Elektromaschine (optional auch die erste Elektromaschine). Ferner kann die Antriebseinrichtung im seriellen Betriebsmodus betrieben werden, wenn die Fahrgeschwindigkeit und/oder eine Antriebsraddrehzahl unterhalb einer Fahrgeschwindigkeitsschwelle und/oder einer Antriebsraddrehzahlschwelle liegt und wenn gleichzeitig der Sollantriebswert oberhalb einer Elektrischer-Betrieb-Schwelle liegt.

Der Sollantriebswert kann z. B. durch einen Fahrhebel, insbesondere durch ein Fahrpedal, von dem Fahrer bzw. der Fahrerin vorgegeben werden.

Wenn der leistungsorientierte Modus ausgewählt ist, kann ein von dem Fahrer oder der Fahrerin angeforderter Sollantriebswert durch die Antriebseinrichtung zuverlässig und schnell bereitgestellt werden. Dadurch kann der Fahrkomfort erhöht werden und auch ein sicheres Fahren gewährleistet sein, insbesondere können hohe Beschleunigungen erreicht werden, die in manchen Verkehrssituationen notwendig sind. Wenn der verbrauchsorientierte Modus ausgewählt ist, kann ein Energieverbrauch (gegenüber dem leistungsorientierten Modus) vermindert sein. Damit kann die Antriebseinrichtung verschiedene Anforderungen erfüllen.

Das Kriterium kann umfassen, dass die Zeitdauer des Betreibens in dem parallelen Boost-Hybridbetrieb eine Zeitschwelle überschreitet und/oder dass eine aus dem Akkumulator während der Zeitdauer des Betreibens in dem parallelen Boost-Hybridbetrieb entnommene Energiemenge eine Energieschwelle überschreitet. In dem parallelen Boost-Hybridbetrieb wird ein Antriebsdrehmoment und/oder eine Antriebsleistung zumindest teilweise durch die erste und/oder die zweite Elektromaschine erzeugt, welche (zumindest teilweise) durch den Akkumulator mit elektrischer Energie gespeist werden. Die elektrische Energie in dem Akkumulator kann durch Betreiben der ersten Elektromaschine im generatorischen Betrieb, die von der Verbrennungskraftmaschine mechanisch angetrieben wird, geladen werden. Dabei kann für ein Laden des Akkumulators eine Energiekonversion notwendig sein, die mit relativ hohen Verlusten behaftet sein kann. In der Regel ist es somit energetisch ungünstig, das Hybridfahrzeug in dem parallelen Boost-Hybridbetrieb unter (zumindest teilweise) Nutzung von elektrischer Energie aus dem Akkumulator anzutreiben. Daher kann die Dauer des Betreibens in dem parallelen Boost-Hybridbetrieb in dem verbrauchsorientierten Modus begrenzt werden. Die aus dem Akkumulator entnommene Energiemenge kann gemessen und/oder simuliert werden. Die Energieschwelle kann manuell einstellbar sein oder kann als ein fester Wert in einem Motorsteuergerät oder einer Antriebseinrichtungssteuerung gespeichert sein.

Wenn der Sollantriebswert von einem Wert unterhalb der Verbrennungskraftmaschine-Schwelle auf den Zwischenwert erhöht wird, kann das Steuern der Antriebseinrichtung bei der Auswahl des leistungsorientierten Modus aufweisen, dass von dem parallelen Hybridbetrieb in den seriellen Hybridbetrieb gewechselt wird, ohne das Erfüllen des Kriteriums abzuwarten. Wenn, in dem leistungsorientierten Modus befindlich, von einem Wert unterhalb der Verbrennungskraftmaschine-Schwelle auf den Zwischenwert gewechselt wird, der Sollantriebswert somit erhöht wird, kann die Wahrscheinlichkeit relativ hoch sein, dass der Sollantriebswert ferner (in naher Zukunft) weiter erhöht wird. Daher kann es in vielen Fällen sinnvoll sein, schon frühzeitig in den seriellen Hybridbetrieb zu wechseln, um eine Leistungsanforderung bzw. einen Sollantriebswert, der oberhalb der Parallelhybridbetrieb-Schwelle liegt, schnell und zuverlässig bereitstellen zu können.

Der Zwischenwert liegt zwischen der Verbrennungskraftmaschine-Schwelle, die einen maximalen Antriebswert in dem parallelen Hybridbetrieb repräsentiert, in dem ausschließlich die Verbrennungskraftmaschine ein Fahrantriebsdrehmoment bewirkt, und der Parallelhybridbetrieb-Schwelle, die einen maximalen Antriebswert in dem parallelen Boost-Hybridbetrieb repräsentiert.

Bei Auswahl des leistungsorientierten Modus kann das Verfahren im Falle einer zweiten Bedingung aufweisen: Steuern der Antriebseinrichtung in dem seriellen Hybridbetrieb, bis ein anderes Kriterium (welches gleich oder verschieden von dem Kriterium sein kann) erfüllt ist, das von der Zeitdauer und/oder dem Energieumsatz eines simulierten Betreibens in dem parallelen Boost-Hybridbetrieb abhängt und, falls das andere Kriterium erfüllt ist, Wechseln in den parallelen Boost-Hybridbetrieb. Ferner kann das Verfahren bei Auswahl des verbrauchsorientierten Modus im Falle der zweiten Bedingung aufweisen: Steuern der Antriebseinrichtung in dem parallelen Boost-Hybridbetrieb, ohne das Erfüllen des anderen Kriteriums abzuwarten. Dabei weist die zweite Bedingung auf, dass der Sollantriebswert auf den Zwischenwert erniedrigt wird. Die zweite Bedingung kann somit bedeuten, dass von einem Antriebswert, welcher oberhalb der Parallelhybridbetrieb-Schwelle liegt, auf einen Wert erniedrigt wird, welcher unterhalb der Parallelhybridbetrieb-Schwelle aber oberhalb der Verbrennungskraftmaschine-Schwelle liegt. In einem solchen Fall kann, bei Auswahl des leistungsorientierten Modus, die Antriebseinrichtung länger in dem seriellen Hybridbetrieb betrieben werden, als bei Auswahl des verbrauchsorientierten Modus. Damit kann ein sportlicheres Fahren bei Auswahl des leistungsorientierten Modus bereitgestellt sein, da der serielle Hybridbetrieb in der Regel erlaubt, ein höheres Antriebsdrehmoment und/oder eine höhere Antriebsleistung breitzustellen als der parallele Boost-Hybridbetrieb. Wenn jedoch der verbrauchsorientierte Modus ausgewählt ist, kann bei Vorliegen der zweiten Bedingung in den parallelen Boost-Hybridbetrieb gewechselt werden, insbesondere unmittelbar, das heißt ohne eine Verzögerung. Damit kann ein Energieverbrauch vermindert werden.

Das andere Kriterium kann umfassen, dass die Zeitdauer seit dem Erniedrigen des Sollantriebswertes auf den Zwischenwert eine andere Zeitschwelle überschreitet und/oder dass eine simulierte aus dem Akkumulator während der Zeitdauer des simulierten Betreiben in dem parallelen Boost-Hybridbetrieb entnommene Energiemenge eine andere Energieschwelle überschreitet.

Wenn der leistungsorientierte Modus ausgewählt ist, und die zweite Bedingung erfüllt ist, kann die Antriebseinrichtung (für eine gewisse Zeit) weiter in dem seriellen Hybridbetrieb betrieben werden, der parallele Boost-Hybridbetrieb somit während dieser Zeitdauer (noch) nicht eingesetzt werden. Eine Energiemenge, welche aus dem Akkumulator entnommen würde, falls die Antriebseinrichtung in dem parallelen Boost-Hybridbetrieb betrieben werden würde, kann jedoch simuliert werden, ohne die Antriebseinrichtung tatsächlich in dem parallelen Boost-Hybridbetrieb zu betreiben. Damit kann ein geeignetes anderes Kriterium definiert werden, wie lange die Antriebseinrichtung (bei Auswahl des leistungsorientierten Modus) weiter in dem seriellen Hybridbetrieb betrieben werden sollte.

Wenn der Sollantriebswert von einem Wert oberhalb der Parallelhybridbetrieb-Schwelle (auf den Zwischenwert) erniedrigt wird, kann das Steuern der Antriebseinrichtung bei Auswahl des verbrauchsorientierten Modus aufweisen: Wechseln von dem seriellen Hybridbetrieb in den parallelen Boost-Hybridbetrieb, ohne das Erfüllen des anderen Kriteriums abzuwarten. Da der parallele Boost-Hybridbetrieb in der Regel ein verbrauchsgünstigerer Betrieb ist als der serielle Hybridbetrieb, kann somit Energie eingespart werden.

Das Verfahren kann ferner ein Detektieren einer Fahrhebelstellung (z. B. Fahrpedalstellung, mechanisches Detektieren, elektronisches Detektieren, Detektieren von Betätigen von einem oder mehreren Knöpfen, Detektieren einer Handhebelstellung, Detektieren einer Auswahl auf einem Berührschirm, etc.) aufweisen. Ferner kann das Verfahren bei Auswahl des verbrauchsorientierten Modus ein Bestimmen des Sollantriebswertes basierend auf der Fahrhebelstellung in einem ersten Bereich eines Fahrhebelweges als einen Wert aufweisen, der größer als ein bei Auswahl des leistungsorientierten Modus bestimmter Sollantriebswert ist. Ferner kann das Verfahren ein Bestimmen des Sollantriebswertes basierend auf der Fahrhebelstellung bei Auswahl des verbrauchsorientierten Modus in einem zweiten Bereich eines Fahrhebelweges als einen Wert aufweisen, der kleiner als ein bei Auswahl des leistungsorientieren Modus bestimmter Sollantriebwert ist.

Der Fahrhebelweg kann als ein Einstellungsbereich des Fahrhebels angesehen werden, innerhalb dessen die Fahrhebelstellung befindlich sein kann. Der Fahrhebelweg und/oder die Fahrhebelstellung kann z. B. ein linearer Weg oder ein gekrümmter, insbesondere kreisförmiger Weg sein. Der Fahrhebelweg und/oder die Fahrhebelstellung kann z. B. in einem Längenmaß und/oder in einem Winkelmaß gemessen werden. In anderen Ausführungsformen kann die Fahrhebelstellung durch Betätigen diskreter Schalter und/oder Knöpfe (z. B. in Abhängigkeit einer Anzahl von betätigten Knöpfen und/oder Schaltern) bestimmt oder definiert sein. In herkömmlichen Verfahren kann ein Sollantriebswert proportional zu einer Fahrhebelstellung (z. B. Anteil oder Prozentwert des Fahrhebelweges) sein. Gemäß Ausführungsformen der vorliegenden Erfindung kann eine Proportionalität zwischen dem Sollantriebswert und der Fahrhebelstellung weiterhin vorliegen, jedoch in verschiedenen Bereichen einer Fahrhebelstellung verschiedene Proportionalitätskonstanten aufweisen. Damit ist eine Abbildung zwischen einer Fahrhebelstellung und dem Sollantriebswert derart einstellbar, dass ein Energieverbrauch vermindert werden kann.

Das Verfahren kann bei Auswahl des leistungsorientierten Modus ferner ein Bestimmen des Sollantriebswertes aufweisen, basierend auf der Fahrhebelstellung über den Fahrhebelweg als Produkt einer Gesamtsteigung und der Fahrhebelstellung entlang des Fahrhebelweges. Damit kann bei Auswahl des leistungsorientierten Modus ein Ansprechverhalten bei Änderung der Fahrhebelstellung gegenüber dem verbrauchsorientierten Modus (insbesondere in einem Zwischenbereich) beschleunigt werden, was einen Fahrkomfort und auch die Sicherheit verbessern kann.

Das Bestimmen des Sollantriebswertes kann bei Auswahl des verbrauchsorientierten Modus ferner aufweisen:
Bestimmen des Sollantriebswertes in einem Anfangsbereich des Fahrhebelweges als Produkt einer Anfangssteigung und der Fahrhebelstellung, in einem Zwischenbereich des Fahrhebelweges als Produkt einer Zwischensteigung und der Fahrhebelstellung, und in einem Endbereich des Fahrhebelweges als Produkt einer Endsteigung und der Fahrhebelstellung, wobei die Gesamtsteigung verschieden von der Anfangssteigung, der Endsteigung und der Zwischensteigung ist. Die Anfangssteigung und/oder die Endsteigung kann größer sein als die Zwischensteigung.

Andere Ausführungsformen können in gewissen Bereichen des Fahrhebelweges einen nichtlinearen Zusammenhang zwischen Sollantriebswert und Fahrhebelstellung definieren. Eine feinere Unterteilung des Fahrhebelweges in mehr Bereiche als den Anfangsbereich, den Zwischenbereich und den Endbereich ist möglich.

Gemäß einem weiteren Aspekt der vorliegenden Erfindung ist ein Hybridfahrzeug mit einer Antriebseinrichtung, die eine Verbrennungskraftmaschine, eine erste Elektromaschine, eine zweite Elektromaschine und einen Akkumulator umfasst, bereitgestellt, wobei die Antriebseinrichtung eine Auswahl aus einem leistungsorientierten Modus und einem verbrauchsorientierten Modus unterstützt. Das Hybridfahrzeug weist ferner eine Antriebseinrichtungssteuerung auf, die ausgebildet ist, ein Verfahren gemäß einer der vorangehenden Ausführungsformen auszuführen.

Ausführungsformen der vorliegenden Erfindung werden nun mit Bezug auf die beiliegenden Zeichnungen erläutert. Die Erfindung ist nicht auf die illustrierten oder beschriebenen Ausführungsformen begrenzt.
- Fig. 1: illustriert schematisch ein Hybridfahrzeug gemäß einer Ausführungsform der vorliegenden Erfindung, welches ausgebildet ist, ein Verfahren gemäß einer Ausführungsform der vorliegenden Erfindung auszuführen;
- Fig. 2: illustriert schematisch ein Hybridfahrzeug gemäß einer anderen Ausführungsform der vorliegenden Erfindung, welches ausgebildet ist, ein Verfahren gemäß einer Ausführungsform der vorliegenden Erfindung auszuführen;
- Fig. 3: illustriert Kurven von von den in Fig. 1 oder 2 illustrierten Hybridfahrzeugen im parallelen Hybridbetrieb bereitgestelltem Drehmoment und Leistung;
- Fig. 4: illustriert schematisch ein Verfahren zum Steuern einer Antriebseinrichtung eines Hybridfahrzeuges gemäß einer Ausführungsform der vorliegenden Erfindung;
- Fig. 5: illustriert verschiedene Betriebsmodi der in Fig. 1 und 2 illustrierten Hybridfahrzeuge, welche in einem Verfahren gemäß einer Ausführungsform der vorliegenden Erfindung eingesetzt werden; und
- Fig. 6: illustriert in einem Graphen ein Verfahren zum Bestimmen eines Sollantriebswertes in Abhängigkeit von einer Fahrpedalstellung gemäß einer Ausführungsform der vorliegenden Erfindung.

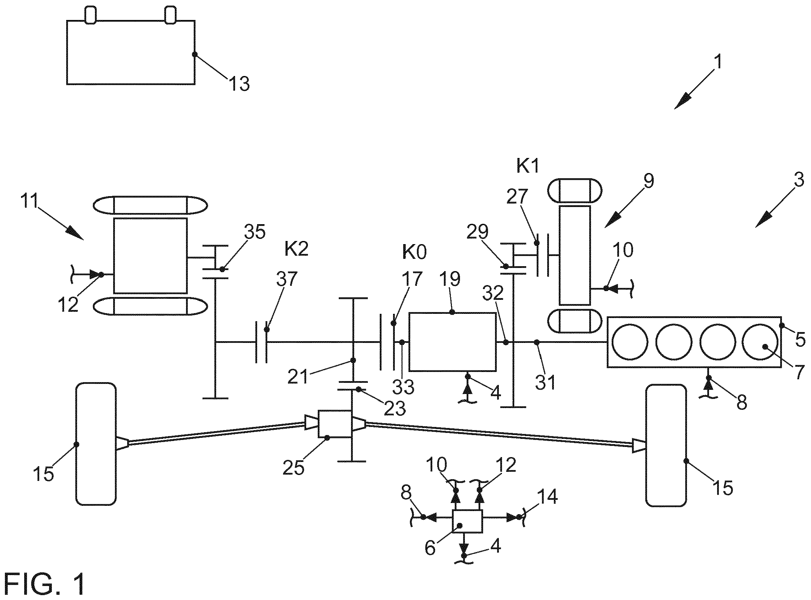

Das in **Fig. 1** schematisch illustrierte Hybridfahrzeug 1 weist eine Antriebseinrichtung 3 auf sowie eine Antriebseinrichtungssteuerung 6, welche ausgebildet ist, ein Verfahren zum Steuern der Antriebseinrichtung 3 des Hybridfahrzeuges 1 gemäß einer Ausführungsform der vorliegenden Erfindung auszuführen. Die Antriebseinrichtung 3 umfasst eine Verbrennungskraftmaschine 5 mit mehreren Zylindern 7, eine erste Elektromaschine (auch als Generator bezeichnet) 9, eine zweite Elektromaschine (auch als Traktionsmaschine bezeichnet) 11 und einen Akkumulator 13, der über nicht illustrierte Energieversorgungskabel (und Leistungselektroniken) sowohl mit der ersten Elektromaschine 9 als auch der zweiten Elektromaschine 11 verbunden ist.

Die Antriebseinrichtung 3 ist zum Antrieb des Hybridfahrzeuges 1 in drei Betriebsmodi betreibbar. Erstens in einem rein elektrischen Betrieb, in dem ein Fahrantriebsdrehmoment (welches z. B. an den Antriebsrädern 15 anliegt) mittels der zweiten Elektromaschine 11 bewirkt wird, während die Verbrennungskraftmaschine 5 ausgeschaltet ist (ihr also insbesondere kein Kraftstoff aus einem nicht illustrierten Tank zugeführt wird). Zweitens ist die Antriebseinrichtung 3 in einem seriellen Hybridbetrieb betreibbar, in dem das Fahrantriebsdrehmoment mittels der zweiten Elektromaschine 11 bewirkt wird und die Verbrennungskraftmaschine 5 die erste Elektromaschine 9 zur Erzeugung von elektrischer Energie antreibt, welche wiederum der zweiten Elektromaschine 11 zugeführt wird (entweder direkt oder über den Akkumulator 13). Die Antriebseinrichtung 3 ist drittens in einem parallelen Hybridbetrieb betreibbar, in dem ein Fahrantriebsdrehmoment mittels der Verbrennungskraftmaschine 5 bewirkt wird und insbesondere die zweite Elektromaschine 11 und/oder die erste Elektromaschine 9 abgeschaltet sind.

In dem in Fig. 1 illustrierten Hybridfahrzeug 1 umfasst die Antriebseinrichtung 3 ferner eine Hauptkupplung K0 (17) sowie ein Getriebe 19, die beide zwischen der Verbrennungskraftmaschine 5 und einem Radantriebstrang 21 angeordnet sind. Der Radantriebstrang 21 ist über ein Differenzial 25 mit dazugehöriger Differenzialübersetzung 23 mit den Antriebsrädern 15 mechanisch verbunden. Die erste Elektromaschine 9 ist über eine erste Kupplung K1 (27) und über ein erstes Übersetzungselement 29 mit einer Ausgangswelle 31 der Verbrennungskraftmaschine 5 verbunden, wobei die Ausgangswelle 31 mechanisch mit einer Eingangswelle 32 des Getriebes 19 verbunden ist. Eine Ausgangswelle 33 des Getriebes 19 ist mit der Hauptkupplung K0 (17) verbunden. Die zweite Elektromaschine 11 ist über ein zweites Übersetzungselement 35 und eine zweite Kupplung K2 (37) mit dem Radantriebstrang 21 verbunden.

In dem Hybridfahrzeug 1 wird ein seriell-paralleles Hybridkonzept umgesetzt. Über eine Skalierung des Akkumulators 13 (auch als HV-Batterie bezeichnet) bezüglich des Energieinhalts und/oder der Leistung (Entlade- und Ladeleistung) kann das Hybridfahrzeug 1 als HEV (Hybrid Electric Vehicle) als auch als ein Plug-In-HEV (PHEV) ausgeführt sein. Die erste Elektromaschine 9 (auch als EM1 bezeichnet) ist z. B. bezüglich der Leistung und des Drehmoments derart dimensioniert, dass unter Berücksichtigung des Übersetzungsverhältnisses 29 von der Verbrennungskraftmaschine 5 zur ersten Elektromaschine 9 jeder mögliche verbrennungsmotorische Betriebspunkt (auch als Arbeitspunkt bezeichnet) im seriellen Betrieb eingestellt werden kann. Die zweite Elektromaschine 11 (auch als elektrischer Fahrmotor EM2 bezeichnet) ist bspw. bezüglich der Leistungsdimensionierung an die Leistungsdimensionierung der Verbrennungskraftmaschine 5 angelehnt, das heißt, sie kann eine ähnliche maximale Leistung bereitstellen.

Für einen parallelen Hybridbetrieb können Übersetzungen von der Verbrennungskraftmaschine zum Antriebsrad 15 in verschiedenartigen Weisen bzw. Ausprägungen vorgesehen sein (z. B. gestuft oder stufenlos), wobei hier mindestens eine Over-Drive-Übersetzung mit z. B. einer typischen Übersetzung von der Verbrennungskraftmaschine 5 zum Antriebsrad 15 von z. B. i = 2,8 vorgesehen ist, was bedeutet, dass, wenn sich die Ausgangswelle 31 der Verbrennungskraftmaschine 5 2,8 mal dreht, sich das Antriebsrad 15 einmal dreht.

Die Untersetzungen von dem Fahrmotor EM2 und dem Generator EM1 können in der Ausführungsform beispielsweise sowohl als Stirnradstufe als auch über ein (festgebremstes) Planetengetriebe umgesetzt werden. Über die Hauptkupplung K0 kann der parallele Leistungspfad (Welle 33) vom Antriebsrad 15 abgekoppelt werden. Der Fahrmotor EM2 und der Generator EM1 sind (optional) jeweils über die zweite Kupplung 37 (auch als K2 bezeichnet) und die erste Kupplung 27 (auch als K1 bezeichnet) abkoppelbar, um Schleppverluste zu reduzieren. Alle Kupplungen K0, K1 und K2 können beispielsweise als reibschlüssige Lammelenkupplungen und/oder formschlüssige Klauenkupplungen ausgeführt sein. Der Generator EM1 kann im Wesentlichen oder ausschließlich generatorisch arbeiten, er kann zum Start der Verbrennungskraftmaschine verwendet werden, oder er kann im parallelen Hybridbetrieb zur Boost-Unterstützung der Verbrennungskraftmaschine 5 verwendet werden. Der rein elektrische Betrieb (EV-Betrieb) und die Rekuperation können über den Fahrmotor EM2 (das heißt die zweite Elektromaschine) durchgeführt werden, während die Hauptkupplung K0 geöffnet ist und die zweite Kupplung K2 geschlossen ist.

In der folgenden Tabelle 1 sind die verschiedenen Betriebsmodi aufgeführt, in denen die Antriebseinrichtung 3 betreibbar ist, zusammen mit den jeweiligen Kopplungszuständen der Hauptkupplung K0, der ersten Kupplung K1 und der zweiten Kupplung K2.

**Tabelle 1:**

| **Betriebsmodus** | **K0** | **K1** | **K2** |
|---|---|---|---|
| EV-Betrieb | offen | beliebig | geschlossen |
| Rekuperation | offen | beliebig | geschlossen |
| Serieller Hybridbetrieb mit und ohne Lastpunktanhebung | offen | geschlossen | geschlossen |
| Paralleler Hybridbetrieb ohne Lastpunktanhebung | geschlossen | offen | offen |
| Paralleler Hybridbetrieb mit Lastpunktanhebung über EM1 | geschlossen | geschlossen | offen |
| Paralleler Hybridbetrieb mit Lastpunktanhebung über EM2 | geschlossen | offen | geschlossen |

Somit ist die Antriebseinrichtung 3 in einem rein elektrischen Betrieb (EV-Betrieb), einem seriellen Hybridbetrieb und einem parallelen Hybridbetrieb betreibbar. Sowohl der serielle Hybridbetrieb als auch der parallele Hybridbetrieb können dabei jeweils ohne oder mit Lastpunktanhebung ausgeführt werden, wie aus der obigen Tabelle 1 ersichtlich ist.

Über die direkte Anbindung der zweiten Elektromaschine 11 (EM2) an das Antriebsrad 15 sind ein effizienter elektrischer Antrieb und eine effiziente Rekuperation durchführbar.

Während des seriellen Hybridbetriebes kann auch schon bei sehr geringen Fahrzeuggeschwindigkeiten und/oder Raddrehzahlen die maximale verbrennungsmotorische Leistung zum Antrieb des Fahrzeug genutzt werden, da in diesem Fall die Hauptkupplung K0 geöffnet ist und daher die Drehzahl der Verbrennungskraftmaschine 5 unabhängig von der Fahrgeschwindigkeit optimal eingestellt werden kann. Aus dem rein elektrischen Betrieb heraus (EV-Betrieb) kann bei geöffneter Hauptkupplung K0 über die erste Elektromaschine 9 (Generator EM1) ein sehr komfortabler und zugkraftneutraler Verbrennungskraftmaschinen-Zustart erreicht werden.

Bei Bedarf einer zusätzlichen Lastpunktanhebung im parallelen Betrieb kann der dafür erforderliche generatorische Betrieb zur Erzeugung von elektrischer Leistung zur Aufladung des Akkumulators wahlweise über die zweite Elektromaschine 11 (Fahrmotor EM2) oder die erste Elektromaschine 9 (Generator EM1) durchgeführt werden. Im parallelen Hybridbetrieb ohne Bedarf einer zusätzlichen Lastpunktanhebung können in dem in Fig. 1 illustrierten Hybridfahrzeug 1 zur Minimierung der Schleppverluste die zweite Elektromaschine 11 (Fahrmotor EM2) und die erste Elektromaschine 9 (Generator EM1) durch Öffnung der zweiten Kupplung 37 (K2) und Öffnen der ersten Kupplung 27 (K1) abgekoppelt werden.

Die Auswahl des rein elektrischen Hybridbetriebs, des seriellen Hybridbetriebs und des parallelen Hybridbetriebs kann zum Zwecke der Verbrauchsminimierung die jeweiligen Effizienzen/Wirkungsgrade der Antriebsstrang-Komponenten berücksichtigen.

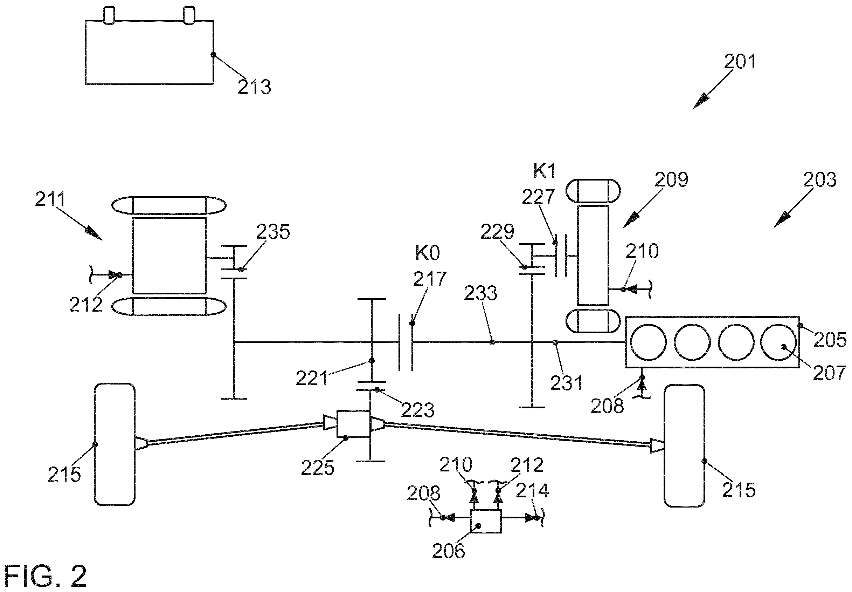

**Fig. 2** illustriert ein Hybridfahrzeug 201 gemäß einer weiteren Ausführungsform der vorliegenden Erfindung, wobei in Struktur und/oder Funktion ähnliche oder gleiche Komponenten in Fig. 1 und 2 mit Bezugszeichen bezeichnet sind, welche sich in den letzten beiden Stellen gleichen. Zur Vereinfachung sind in der folgenden Beschreibung teilweise die Bezugszeichen aus beiden Fig. 1 und 2 angegeben, wobei diese jeweils durch ein Komma getrennt sind.

Das in Fig. 2 illustrierte Hybridfahrzeug 201 kann als eine "vereinfachte" Systemtopologie ohne eine Abkoppelbarkeit von Fahrmotor EM2 und Generator EM1 sowie ohne ein Getriebe (gestuft oder stufenlos) aufgefasst werden, so dass nur eine Overdrive-Übersetzung von der Verbrennungskraftmaschine 205 zu dem Antriebsrad 215 vorhanden sein kann.

Im elektrischen Betrieb ist die Hauptkupplung K0 geöffnet. Verbrennungskraftmaschine und elektrischer Generator EM1 stehen still (Drehzahl = Null). Die Fahranforderung wird über den elektrischen Fahrmotor EM2 mit entsprechender Entnahme einer elektrischen Leistung aus der HV-Batterie bereitgestellt. Der hybridische Fahrbetrieb ist seriell und parallel darstellbar. Im seriellen Hybridbetrieb ist die Hauptkupplung K0 geöffnet. Die Drehzahl der Verbrennungskraftmaschine ist frei einstellbar. Die mechanische Leistung der Verbrennungskraftmaschine wird über den Generator EM1 in eine elektrische Leistung gewandelt. Diese elektrische Leistung wird bei entsprechendem Bedarf zur Nachladung der HV-Batterie genutzt sowie vom Fahrmotor EM2 zur Darstellung der Fahranforderung genutzt.

Im parallelen Hybridbetrieb ist die Hauptkupplung K0 geschlossen. Die Drehzahl der Verbrennungskraftmaschine ist über die Overdrive-Übersetzung an die Raddrehzahl gekoppelt. Die mechanische Leistung der Verbrennungskraftmaschine wird bei entsprechendem Bedarf über einen generatorischen Betrieb des elektrischen Generators EM1 zur Nachladung der HV-Batterie genutzt sowie mechanisch zur Darstellung der Fahranforderung direkt an das Rad übertragen.
Im parallelen Hybridbetrieb ohne Bedarf einer zusätzlichen Lastpunktanhebung kann der Generator EM1 zur Minimierung der Schleppverluste abgekoppelt werden (mit für Fahrer akzeptabler Dynamikeinbuße, zum Bsp. GRA- und/oder ACC-Betrieb). Bei einer noch weiteren Ausführungsform kann auch die erste Kupplung 227 fehlen.

Die in Fig. 1 und 2 illustrierten Antriebseinrichtungssteuerungen 6 und 206 sind ausgebildet, ein Verfahren zum Steuern einer Antriebseinrichtung eines Hybridfahrzeuges gemäß einer Ausführungsform der vorliegenden Erfindung auszuführen.

Ausführungsformen der vorliegenden Erfindung können auf einer CO₂-optimalen Betriebsstrategie basieren, wobei die Antriebseinrichtung 3 oder 203 (sofern möglich) vorzugsweise in dem verbrauchsorientierten Modus im parallelen Hybridmodus betrieben wird. Das Hybridfahrzeug kann ein Getriebe, wie etwa das in Fig. 1 illustrierte Hybridfahrzeug 1 aufweisen, braucht jedoch kein Getriebe aufweisen, wie etwa das in Fig. 2 illustrierte Hybridfahrzeug 201. Die Antriebseinrichtung 3 oder 203 der in Fig. 1 und 2 illustrierten Hybridfahrzeuge 1 oder 201 kann zum Antrieb im Wesentlichen in drei Betriebsarten bzw. Betriebsmodi betrieben werden. Darüber hinaus sind die Antriebseinrichtungen 3 oder 203 (gemäß einer Fahrerauswahl) in dem leistungsorientierten Modus oder in dem verbrauchsorientierten Modus betreibbar.

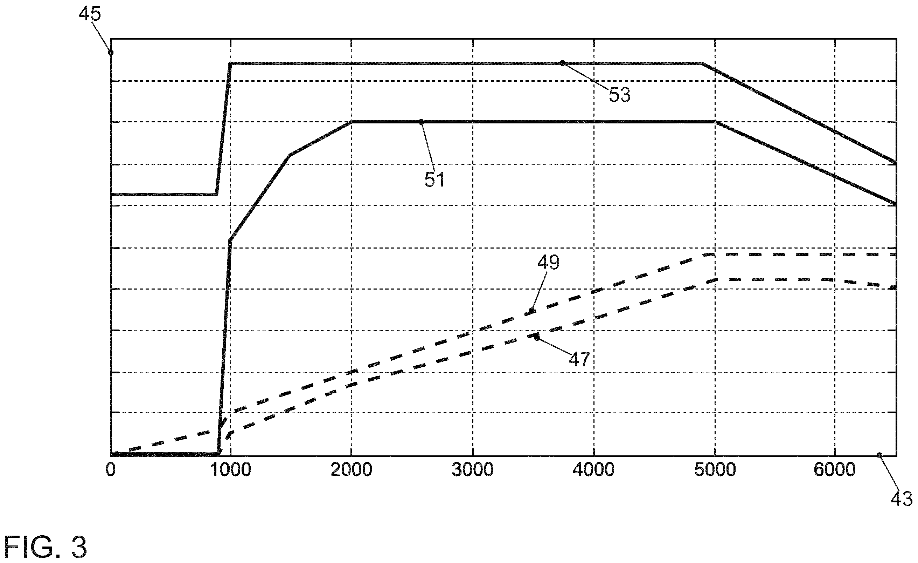

**Fig. 3** illustriert für den parallelen Hybridbetrieb in einem Koordinatensystem mit einer Abszisse 43, welche die Drehzahl der Verbrennungskraftmaschine 5, 205 in der Einheit 1/min illustriert, und mit einer Ordinate 45, welche die Leistung in der Einheit kW und/oder das Drehmoment in der Einheit Nm anzeigt, welches an der Eingangswelle 32 des Getriebes 19 bzw. einer Ausgangswelle 233 anliegt, eine Leistung 47 der Verbrennungskraftmaschine 5, 205, eine Systemleistung 49, ein Drehmoment 51 der Verbrennungskraftmaschine 5, 205 sowie ein Systemdrehmoment 53 der jeweiligen gesamten Antriebseinrichtung 3, 203. Die Systemleistung 49 und das Systemdrehmoment 53 sind unter Berücksichtigung einer elektrischen Boost-Unterstützung durch den Generator EM1 (und/oder den Fahrmotor EM2) definiert. Leistungs- und Drehmomentanforderungen (das heißt Sollleistungen bzw. Solldrehmomente) oberhalb der verbrennungsmotorischen Volllast können somit im parallelen Hybridbetrieb bis zur definierten Systemleistung 49 und bis zum definierten Systemdrehmoment 53 über einen kombinierten verbrennungs- und elektromotorischen Betrieb mit entsprechender elektrischen Leistungsentnahme aus dem Akkumulator (HV-Batterie) 13, 213 dargestellt werden.

Der parallele Hybridbetrieb kann (sofern möglich) in nahezu allen Betriebsszenarien effizienter sein als der serielle Hybridbetrieb. Der parallele Hybridbetrieb ist jedoch bezüglich der Leistungsdarstellung (insbesondere Leistungsbereitstellung an Antriebsrädern) durch eine Grenze von mittels der Verbrennungskraftmaschine erzeugbarer Leistung und/oder Drehmoment und/oder durch die Grenze der Systemleistung (Verbrennungskraftmaschine zusammen mit der ersten und/oder der zweiten Elektromaschine) begrenzt. Folglich kann für den leistungsorientierten Modus (auch als Sport-Modus bezeichnet) insbesondere der serielle Hybridbetrieb berücksichtigt werden.

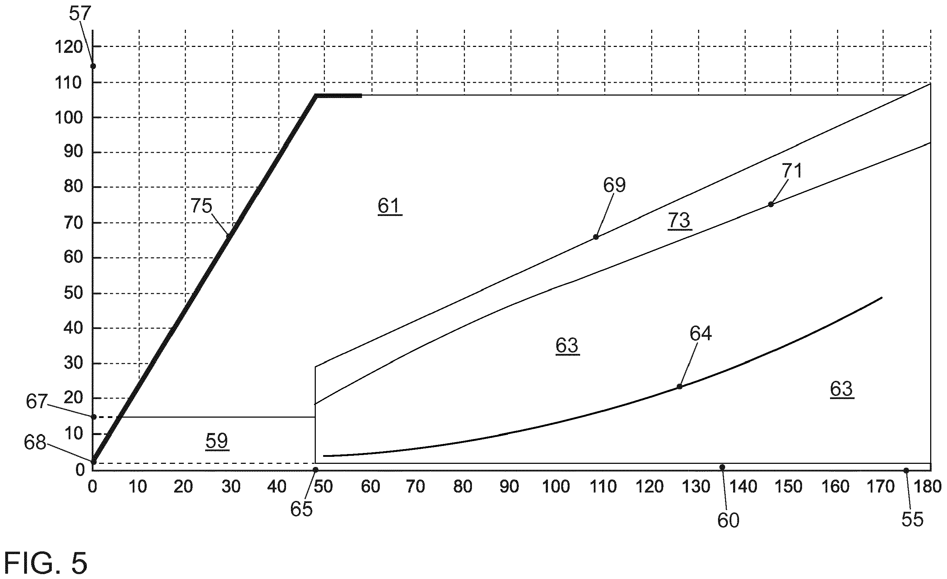

Über einen Betriebsartenwechsel aus dem parallelen Hybridbetrieb in den seriellen Hybridbetrieb kann ein verbrauchsorientierter Modus (auch als Öko-Modus bezeichnet) und ein leistungsorientierter Modus (auch als Sport-Modus bezeichnet) umgesetzt werden. Das im parallelen Hybridbetrieb darstellbare maximale von der Verbrennungskraftmaschine erreichbare Drehmoment und das maximale Systemdrehmoment bzw. die im parallelen Hybridbetrieb darstellbare maximale Verbrennungskraftmaschinenleistung und die maximale Systemleistung können ein dafür erforderliches Hysterese-Band definieren (z. B. ein in Fig. 5 illustrierter Zwischenbereich 73), wie nachfolgend genauer erläutert wird.

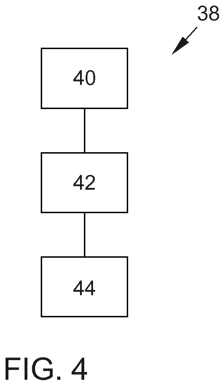

**Fig. 4** illustriert schematisch ein Verfahren 38 zum Steuern einer Antriebseinrichtung eines Hybridfahrzeuges (z. B. der Hybridfahrzeuge 1 oder 201, welche in Fig. 1 oder Fig. 2 dargestellt sind) gemäß einer Ausführungsform der vorliegenden Erfindung. Dabei umfasst die Antriebseinrichtung (z. B. Antriebseinrichtung 3 oder 203) eine Verbrennungskraftmaschine (z. B. 5 oder 205), eine erste Elektromaschine (z. B. 9 oder 209), eine zweite Elektromaschine (z. B. 11 oder 211) und einen Akkumulator (z. B. 13 oder 213) und für die Antriebsvorrichtung ist ein leistungsorientierter Modus oder ein verbrauchsorientierter Modus auswählbar. Bei gewähltem verbrauchsorientierten Modus weist das Verfahren im Falle einer ersten Bedingung einen Verfahrensschritt 40 auf: Steuern der Antriebseinrichtung in einem parallelen Boost-Hybridbetrieb, bis ein Kriterium erfüllt ist, das von der Zeitdauer und/oder dem Energieumsatz des Betreibens in dem parallelen Boost-Hybridbetrieb abhängt. Falls das Kriterium erfüllt ist, weist das Verfahren 38 ferner den Schritt 42 auf: Wechseln in einen seriellen Hybridbetrieb, in dem das Fahrantriebsdrehmoment mittels der zweiten Elektromaschine bewirkt wird und die Verbrennungskraftmaschine die erste Elektromaschine zur Erzeugung von elektrischer Energie antreibt. Bei gewähltem leistungsorientiertem Modus im Falle der ersten Bedingung weist das Verfahren den Schritt 44 auf: Steuern der Antriebseinrichtung in dem seriellen Hybridbetrieb, ohne das Erfüllen des Kriteriums abzuwarten. Somit können die Schritte 40 und 42 bei gewähltem verbrauchsorientiertem Modus ausgeführt werden, wobei der Schritt 44 bei gewähltem leistungsorientierten Modus ausgeführt werden kann.

Die erste Bedingung weist dabei auf, dass ein Sollantriebswert (das heißt z. B. ein fahrergewünschtes Drehmoment bzw. eine fahrergewünschte Leistung) auf einen Zwischenwert erhöht wird, der zwischen einer Verbrennungskraftmaschine-Schwelle, die einen Maximalantrieb in einem parallelen Hybridbetrieb repräsentiert, in dem die Verbrennungskraftmaschine ein Fahrantriebsmoment (insbesondere ausschließlich) bewirkt, und einer Parallelhybridbetrieb-Schwelle, die einen maximalen Antriebswert in dem parallelen Boost-Hybridbetrieb repräsentiert, in dem die Verbrennungskraftmaschine und zusätzlich die erste Elektromaschine und/oder die zweite Elektromaschine ein Fahrantriebsdrehmoment bewirkt, liegt.

Mit Bezug auf **Fig. 5** wird nachfolgend der serielle Hybridbetrieb, der parallele Hybridbetrieb, sowie der parallele Boost-Hybridbetrieb erläutert und auch die Parallelhybridbetrieb-Schwelle und die Verbrennungskraftmaschine-Schwelle werden beispielhaft erläutert.

Auf der Abszisse 55 in Fig. 5 ist die Geschwindigkeit des Hybridfahrzeuges in der Einheit km/h aufgetragen und auf der Ordinate 57 ist die (verfügbare) Antriebsleistung in der Einheit kW aufgetragen. In einem Bereich 59 und einem Bereich 60 wird der rein elektrische Betrieb (EV-Betrieb) durchgeführt, in einem Bereich 61 wird der serielle Hybridbetrieb (serieller Betrieb) durchgeführt und in einem Bereich 63 wird der parallele Hybridbetrieb (paralleler Betrieb) durchgeführt. Die Kurve 64 repräsentiert den Fahrwiderstand bei Konstantgeschwindigkeitsfahrt in der Ebene. Das in Fig. 5 dargestellte Diagramm kann analog als verfügbares Antriebsdrehmoment (anstatt von Antriebsleistung) über der Fahrzeuggeschwindigkeit oder auch der Raddrehzahl dargestellt werden.

Der rein elektrische Betrieb wird in Bereich 59 durchgeführt, falls die Fahrgeschwindigkeit unterhalb einer Fahrgeschwindigkeitsschwelle 65 liegt und die Antriebsleistung (Sollantriebsleistung) unterhalb einer Elektrischer-Betrieb-Leistungsschwelle 67 liegt.

Ferner wird der rein elektrische Betrieb in Bereich 60 durchgeführt, falls die Fahrgeschwindigkeit oberhalb der Fahrgeschwindigkeitsschwelle 65 liegt und die Antriebsleistung (Sollantriebsleistung) unterhalb einer weiteren Elektrischer-Betrieb-Leistungsschwelle 68 liegt, die kleiner ist (z. B. 3 kW) als die Elektrischer-Betrieb-Leistungsschwelle 67.

Der parallele Hybridbetrieb in dem Bereich 63 wird durchgeführt, falls sowohl die Fahrgeschwindigkeit oberhalb der Fahrgeschwindigkeitsschwelle 65 liegt, eine Sollantriebsleistung unterhalb der fahrgeschwindigkeitsabhängigen Parallelhybridbetrieb-Leistungsschwelle 69 liegt, als auch eine Sollantriebsleistung oberhalb der weiteren Elektrischer-Betrieb-Schwelle 68 liegt. Die Parallelhybridbetrieb-Leistungsschwelle 69 ist hier als die Summe der maximalen Ausgabeleistung 71 der Verbrennungskraftmaschine 5, 205 und der Boost-Unterstützung der ersten Elektromaschine 9, 209 und/oder der Boost-Unterstützung der zweiten Elektromaschine 11, 211 definiert. In dem Bereich 73 erfolgt somit im parallelen Hybridbetrieb ein Boost mittels der ersten Elektromaschine EM1 und/oder der zweiten Elektromaschine EM2.

Der serielle Hybridbetrieb wird im Bereich 61 durchgeführt, falls sowohl die Fahrgeschwindigkeit unterhalb der Fahrgeschwindigkeitsschwelle 65 liegt als auch die Sollantriebsleistung oberhalb der Elektrischer-Betrieb-Leistungsschwelle 67 liegt. Ferner wird der serielle Hybridbetrieb in dem Bereich 61 durchgeführt, falls sowohl die Fahrgeschwindigkeit oberhalb der Fahrgeschwindigkeitsschwelle 65 liegt als auch die Sollantriebsleistung oberhalb einer fahrgeschwindigkeitsabhängigen Parallelhybridbetrieb-Leistungsschwelle 69 liegt.

Der elektrische Betrieb ist bezüglich der maximalen Antriebsleistungsdarstellung zur Verbrauchsminimierung durch die Elektrischer-Betrieb-Schwelle 67 und durch die weitere Elektrischer-Betrieb-Schwelle 68 begrenzt (hier z. B.: bis ca. 49 km/h, ca. 15 kW-Antriebsleistung ab ca. 49 km/h ca. 3 kW-Antriebsleistung).

Der parallele Hybridbetrieb wird durchgeführt, sobald unter Berücksichtigung des Übersetzungsverhältnisses von Verbrennungskraftmaschine 5, 205 zum Antriebsrad 15, 215 eine minimale Drehzahl der Verbrennungskraftmaschine 5, 205 überschritten wird. In einer beispielhaften Ausführungsform ist die Overdrive-Übersetzung von der Verbrennungskraftmaschine 5, 205 zum Antriebsrad 15, 215 i = 2,8, woraus sich bei ca. 49 km/h Fahrzeuggeschwindigkeit eine Drehzahl der Verbrennungskraftmaschine 5, 205 von ca. 1200 U/min ergibt. Ab dieser Drehzahl ist die Verbrennungskraftmaschine in der Lage, selbsttätig das Antriebsdrehmoment bzw. die Antriebsleistung zu erzeugen. Der parallele Hybridbetrieb ist bezüglich der maximalen Antriebsleistungsdarstellung durch die maximale Belastung der Verbrennungskraftmaschine und unter Berücksichtigung der elektrischen Boost-Unterstützung durch den Generator EM1 und/oder den Fahrmotor EM2 durch die Systemleistung begrenzt (hier durch die Parallelhybridbetrieb-Leistungsschwelle 71 (ohne Boost) oder 69 (mit Boost)). Oberhalb der Elektrischer-Betrieb-Leistungsschwelle 67 und oberhalb der Parallelhybridbetrieb-Leistungsschwelle 69 wird der serielle Hybridbetrieb durchgeführt. Der serielle Hybridbetrieb ist bezüglich der maximalen Antriebsleistungsdarstellung durch die Dimensionierung der zweiten Elektromaschine 11, 211 (Fahrmotor EM2) durch die Linie 75 begrenzt. Die Schwellen 67, 68, 69, 71, 65 können verbrauchsoptimal bzw. CO₂-optimal bestimmt werden.

Die Herleitung einer CO₂-optimierten hybridischen Betriebsstrategie erfolgt auf Basis eines Vergleichs des konventionellen, rein verbrennungsmotorischen Antriebs mit einem intermittierenden elektrisch-verbrennungsmotorischen Fahrbetrieb. Dabei sind im Hybridbetrieb (seriell und/oder parallel) neben der Rekuperation, der Kraftstoffmehrverbrauch durch Lastpunktanhebung sowie der Energieeinsatz für das elektrische Fahren und die Motorstartvorgänge zu berücksichtigen. Das elektrische Fahren wird dann nur für einen energetisch sinnvollen Bereich zugelassen, für den der Gesamtwirkungsgrad trotz der mehrfachen, verlustbehafteten Energieumwandlung größer ist als im rein verbrennungsmotorischen Betrieb.

Welcher Betriebsmodus durchgeführt wird, hängt auch davon ab, ob der verbrauchsorientierte oder der leistungsorientiere Modus ausgewählt ist. Die Linie 69 in Fig. 5 kann gemäß Ausführungsformen der vorliegenden Erfindung die in dem Verfahren 38 referenzierte Parallelhybridbetrieb-Schwelle repräsentieren und die Linie 71 kann die in dem Fahrverfahren 38 referenzierte Verbrennungskraftmaschine-Schwelle repräsentieren.

Ein Betriebsartenwechsel aus dem parallelen in den seriellen Hybridbetrieb, d. h. ein Betriebsartenwechsel aus dem Bereich 63 in Fig. 5 in den Bereich 61 in Fig. 5, kann über ein Hysterese-Band dargestellt werden, dass auf der Systemauslegung (Systemleistung und Systemdrehmoment, siehe den Bereich 73 in Fig. 5) basiert.

In dem verbrauchsorientierten Modus (Öko-Modus) kann im parallelen Hybridbetrieb der unmittelbare (nicht verzögerte) Übergang in den seriellen Hybridbetrieb bei Leistungsanforderungen (und/oder Drehmomentanforderungen) größer als Systemvolllast erfolgen (das heißt größer als die Parallelhybridbetrieb-Schwelle 69).

In dem verbrauchsorientierten Modus kann der Übergang in den seriellen Hybridbetrieb bei Leistungsanforderungen in einem Zwischenbereich (Bereich 73 in Fig. 5) größer als die Verbrennungskraftmaschine-Schwelle (z. B. Schwelle 71 in Fig. 5) und kleiner als Systemvolllast (z. B. kleiner als Parallelhybridbetrieb-Schwelle 69 des parallelen Boost-Hybridbetriebes) hingegen über ein Energie- und/oder ein Zeitintegral verzögert umgesetzt werden, wie nachfolgend erläutert ist.

### 1. Energieintegral:

Gemäß Ausführungsformen der vorliegenden Erfindung kann der Wechsel in den seriellen Hybridbetrieb erfolgen, sobald die aus dem Akkumulator 13 oder 213 zur Darstellung des geforderten systemischen Drehmoments entnommene Energiemenge (über der zeitintegrierten Leistungsentnahme aus dem Akkumulator) einen bestimmten Grenzwert übersteigt.

### 2. Zeitintegral:

Gemäß einer anderen Ausführungsform der vorliegenden Erfindung kann der Wechsel in den seriellen Hybridbetrieb erfolgen, sobald die zeitliche Dauer der systemischen Leistungsanforderung, die größer als die Verbrennungskraftmaschine-Schwelle (z. B. Schwelle 71 in Fig. 5) und kleiner als die Systemvolllast (z. B. Parallelhybridbetrieb-Schwelle 69 in Fig. 5) ist, einen bestimmten Grenzwert überschreitet.

Ergänzend zu den im Verfahren 38 und oben beschriebenen Verfahrensschritten und/oder Berechnungsmethodiken auf Basis eines Energie- und/oder eines Zeitintegrals kann in dem verbrauchsorientierten Modus der Betriebsartenwechsel aus dem parallelen Hybridbetrieb in den seriellen Hybridbetrieb über eine Fahrhebelapplikation (insbesondere Fahrpedalapplikation) weiter verzögert werden.

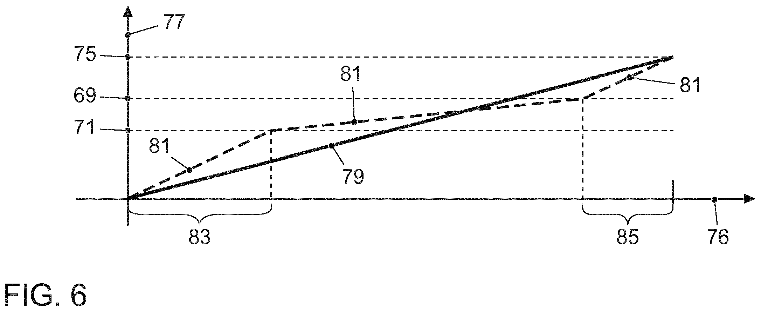

**Fig. 6** illustriert in einem Graphen die Abhängigkeit eines (vom Fahrer bzw. von der Fahrerin definierten) Sollantriebswertes, z. B. Sollantriebsleistung oder Sollantriebsdrehmoment, in Abhängigkeit von einer Fahrhebelstellung, konkret in Figur 6 einer Fahrpedalstellung. Die Abszisse 76 des in Fig. 6 illustrierten Koordinatensystems bezeichnet dabei das Verhältnis einer Fahrpedalstellung und eines Fahrpedalweges und die Ordinate 77 bezeichnet einen Sollantriebswert, insbesondere eine Sollantriebsleistung oder ein Sollantriebsdrehmoment.

Die Kurve 79 illustriert den Sollantriebswert in Abhängigkeit der Fahrpedalstellung für den leistungsorientierten Modus. Die Kurve 81 illustriert den Sollantriebswert in Abhängigkeit der Fahrpedalstellung für den verbrauchsorientierten Modus der Antriebseinrichtungen 3 oder 203 der in Fig. 1 oder 2 illustrierten Hybridfahrzeuge 1 oder 201.

Üblicherweise wird die vom Fahrer oder der Fahrerin gewählte Fahrpedalstellung linearproportional in eine entsprechende Leistungsdarstellung (Sollantriebswert des Hybridfahrzeuges) umgesetzt, wie durch die Kurve 79 dargestellt ist. Für einen weiter verzögerten Übergang aus dem parallelen in den seriellen Hybridbetrieb bei Auswahl des verbrauchsorientierten Modus kann die Fahrpedalapplikation entsprechend angepasst werden, wie durch die Kurve 81 dargestellt ist. Die linear-proportionale Abhängigkeit der Leistungsdarstellung von der Fahrpedalstellung kann dabei grundsätzlich beibehalten werden. Jedoch wird die Änderung der Leistungsdarstellung (Sollantriebswert) in Abhängigkeit einer Änderung der Fahrpedalstellung für Leistungsanforderungen größer als die Verbrennungskraftmaschine-Schwelle und kleiner als die Parallelhybridbetrieb-Schwelle im Vergleich zur Änderung der Leistungsdarstellung in Abhängigkeit einer Änderung der Fahrpedalstellung für Leistungsanforderungen kleiner als die Verbrennungskraftmaschine-Schwelle und größer als die Parallelhybridbetrieb-Schwelle reduziert. In Folge dessen muss im Hysterese-Band gemäß Leistungsanforderungen größer als Verbrennungskraftmaschine-Schwelle und kleiner als Parallelhybridbetrieb-Schwelle (Systemvolllast) der Fahrer bzw. die Fahrerin das Fahrpedal "weiter durchtreten", um die Leistungsdarstellung des Fahrzeuges zu erhöhen.

Bezugszeichen 71 bezeichnet analog zu dem in Fig. 5 benutzen Bezugszeichen 71 die Verbrennungskraftmaschine-Schwelle, Bezugszeichen 69 bezeichnet die Parallelhybridbetrieb-Schwelle (Systemvolllastgrenze) und Bezugszeichen 75 bezeichnet die Antriebsgrenze im seriellen Betrieb.

Der Sollantriebswertes kann basierend auf der Fahrhebelstellung bei Auswahl des verbrauchsorientierten Modus in einem ersten Bereich 83 eines Fahrhebelweges als ein Wert bestimmt sein, der größer als ein bei Auswahl des leistungsorientierten Modus bestimmter Sollantriebswert ist. Der Sollantriebswert kann basierend auf der Fahrhebelstellung bei Auswahl des verbrauchsorientierten Modus in einem zweiten Bereich 85 eines Fahrhebelweges als ein Wert bestimmt sein, der kleiner als ein bei Auswahl des leistungsorientieren Modus bestimmter Sollantriebwert ist.

Im leistungsorientierten Modus kann der unmittelbare Übergang in den seriellen Hybridbetrieb dagegen schon bei Leistungsanforderungen größer als die Verbrennungskraftmaschine-Schwelle erfolgen.

Der Betriebsartenwechsel aus dem seriellen in den parallelen Hybridbetrieb (wenn somit der Sollantriebswert von einem Wert oberhalb der Parallelhybridbetrieb-Schwelle auf einen Zwischenwert erniedrigt wird) kann analog zum Betriebsartenwechsel parallel/seriell umgesetzt werden. Hierzu kann es erforderlich sein, neben dem seriellen Betrieb zur Darstellung der Fahranforderung einen äquivalenten parallelen Hybridbetrieb zur Darstellung der Fahranforderung virtuell (insbesondere simuliert) mit zu betrachten.

In dem verbrauchsorientierten Modus befindlich kann im seriellen Hybridbetrieb der unmittelbare Übergang in den parallelen Hybridbetrieb bei Leistungsanforderungen im äquivalenten parallelen Hybridbetrieb, die kleiner als die Parallelhybridbetrieb-Schwelle (Systemvolllast) sind, erfolgen.

In dem leistungsorientierten Modus (Sport-Modus) kann im seriellen Hybridbetrieb der unmittelbare Übergang in den parallelen Hybridbetrieb bei Leistungsanforderungen im äquivalenten parallelen Hybridbetrieb, die kleiner als die Verbrennungskraftmaschine-Schwelle (d. h. Volllast der Verbrennungskraftmaschine) sind, erfolgen

In diesem leistungsorientierten Modus kann der Übergang in den parallelen Hybridbetrieb bei Leistungsanforderungen kleiner als Systemvolllast und größer als Verbrennungskraftmaschine-Volllast (Verbrennungskraftmaschine-Schwelle) im äquivalenten parallelen Hybridbetrieb über ein Energie- oder ein Zeitintegral verzögert umgesetzt werden.

### 1. Energieintegral:

Überschreitet die aus dem Akkumulator zur Darstellung der geforderten systemischen Leistung im äquivalenten (simulierten) parallelen Hybridbetrieb entnommene Energiemenge (über der zeitintegrierten Entnahme aus dem Akkumulator) einen bestimmten Grenzwert, so kann der Wechsel in den parallelen Hybridbetrieb, insbesondere parallelen Boost-Hybridbetrieb, erfolgen.

### 2. Zeitintegral:

Überschreitet die zeitliche Dauer der systemischen Leistungsanforderung, die größer als die Verbrennungskraftmaschine-Schwelle (d. h. Volllast der Verbrennungskraftmaschine) und kleiner als die Systemvolllast (Parallelhybridbetrieb-Schwelle) im äquivalenten (simulierten) parallelen Hybridbetrieb ist, einen bestimmten Grenzwert, kann der Wechsel in den parallelen Hybridbetrieb, insbesondere parallelen (Boost-)Hybridbetrieb, erfolgen.

Ergänzend zu der oben dargestellten Berechnungsmethodik auf Basis eines Energie- und/oder eines Zeitintegrals kann auch im leistungsorientierten Modus der Betriebsartenwechsel aus dem seriellen in den parallelen Hybridbetrieb über eine Fahrhebelapplikation (insbesondere Fahrpedalapplikation) ähnlich der Darstellung in Fig. 6 weiter verzögert werden.

Gemäß einer Ausführungsform der vorliegenden Erfindung hat ein Fahrer oder eine Fahrerin der Hybridfahrzeuge 1 oder 201 die Wahl zwischen einem effizienten verbrauchsorientierten Modus (Öko-Modus) und einem leistungsorientierten Modus (Sport-Modus), beispielsweise über eine Wählhebelstellung.

Im verbrauchsorientierten Modus (Öko-Modus) kann der Betriebsartenwechsel parallel/seriell (zumindest teilweise) verzögert umgesetzt werden, während der Betriebsartenwechsel seriell/parallel (zumindest teilweise) unmittelbar umgesetzt werden kann. In Folge dessen kann der effiziente parallele Hybridbetrieb soweit wie möglich bevorzugt werden, um einen möglichst effizienten Verbrauch darzustellen.

Der leistungsorientierte Modus (Sport-Modus) kann jedoch beim Betriebsartenwechsel parallel/seriell den leistungsstärkeren seriellen Betrieb (zumindest teilweise) bevorzugt auswählen und kann beim Betriebsratenwechsel seriell/parallel analog den Rückfall in den leistungsschwächeren parallelen Hybridbetrieb (zumindest teilweise) verzögert durchführen. In Folge dessen kann soweit wie möglich eine leistungsorientierte Betriebsartenauswahl dargestellt werden.

### Bezugszeichenliste

- 1: Hybridfahrzeug
- 3: Antriebseinrichtung
- 5: Verbrennungskraftmaschine
- 6: Antriebseinrichtungssteuerung
- 7: Zylinder
- 8: Steuersignal
- 9: erste Elektromaschine
- 10: Steuersignal
- 11: zweite Elektromaschine
- 12: Steuersignal
- 13: Akkumulator
- 14: Steuersignal
- 15: Antriebsrad
- 17: Hauptkupplung K0
- 19: Getriebe
- 21: Radantriebstrang
- 23: Differenzialübersetzung
- 25: Differenzial
- 27: erste Kupplung K1
- 29: Übersetzungselement
- 31: Ausgangswelle Verbrennungskraftmaschine
- 32: Eingangswelle Getriebe
- 33: Ausgangswelle Getriebe
- 35: Übersetzungselement
- 37: zweite Kupplung K2
- 38: Verfahren
- 40: Verfahrensschritt
- 42: Verfahrensschritt
- 44: Verfahrensschritt
- 43: Abszisse
- 45: Ordinate
- 47: Verbrennungskraftmaschine-Leistung
- 49: Systemleistung
- 51: Verbrennungskraftmaschine-Drehmoment
- 53: Systemdrehmoment
- 55: Abszisse
- 57: Ordinate
- 59, 60: Bereiche rein elektrischen Betriebs
- 61: Bereich serieller Hybridbetrieb
- 63: Bereich paralleler Hybridbetrieb
- 64: Fahrwiderstand bei Konstantgeschwindigkeitsfahrt
- 65: Fahrgeschwindigkeitsschwelle
- 67: Elektrischer-Betrieb-Schwelle
- 68: weitere Elektrischer-Betrieb-Schwelle
- 69: Parallelhybridbetrieb-Schwelle
- 71: maximale Ausgangsleistung der Verbrennungskraftmaschine
- 73: Boost-Bereich
- 75: obere Grenze für den seriellen Hybridbetrieb
- 76: Abszisse
- 77: Ordinate
- 79: Kurve
- 81: Kurve
- 83: erster Bereich eines Fahrhebelweges
- 85: zweiter Bereich eines Fahrhebelweges

## Patentansprüche

1. Verfahren zum Steuern einer Antriebseinrichtung (3, 203) eines Hybridfahrzeuges (1, 201), die eine Verbrennungskraftmaschine (5, 205), eine erste Elektromaschine (9, 209), eine zweite Elektromaschine (11, 211) und einen Akkumulator (13, 213) umfasst, wobei für die Antriebsvorrichtung ein leistungsorientierter Modus oder ein verbrauchsorientierter Modus auswählbar ist,
wobei das Verfahren bei gewähltem verbrauchsorientierten Modus im Falle einer ersten Bedingung aufweist:
Steuern der Antriebseinrichtung in einem parallelen Boost-Hybridbetrieb, in dem die Verbrennungskraftmaschine (5, 205) und zusätzlich die erste Elektromaschine und/oder die zweite Elektromaschine ein Fahrantriebsdrehmoment bewirkt, bis ein Kriterium erfüllt ist, das von der Zeitdauer des Betreibens und/oder dem Energieumsatz in dem parallelen Boost-Hybridbetrieb abhängt, und
falls das Kriterium erfüllt ist, Wechseln in einen seriellen Hybridbetrieb, in dem das Fahrantriebsdrehmoment mittels der zweiten Elektromaschine (11, 211) bewirkt wird und die Verbrennungskraftmaschine (5, 205) die erste Elektromaschine (9, 209) zur Erzeugung von elektrischer Energie antreibt,
wobei das Verfahren bei gewähltem leistungsorientierten Modus im Falle der ersten Bedingung aufweist:
Steuern der Antriebseinrichtung in dem seriellen Hybridbetrieb, ohne das Erfüllen des Kriteriums abzuwarten,
wobei die erste Bedingung aufweist:
ein Sollantriebswert wird auf einen Zwischenwert erhöht, der zwischen
einer Verbrennungskraftmaschine-Schwelle (71), die einen maximalen Antriebswert in einem parallelen Hybridbetrieb repräsentiert, in dem ausschließlich die Verbrennungskraftmaschine (5, 205) ein Fahrantriebsdrehmoment bewirkt, und
einer Parallelhybridbetrieb-Schwelle (69), die einen maximalen Antriebswert in dem parallelen Boost-Hybridbetrieb repräsentiert, liegt.

2. Verfahren gemäß Anspruch 1, wobei das Kriterium umfasst:
die Zeitdauer des Betreibens in dem parallelen Boost-Hybridbetrieb überschreitet eine Zeitschwelle und/oder
eine aus dem Akkumulator (13,213) während der Zeitdauer des Betreibens in dem parallelen Boost-Hybridbetrieb entnommene Energiemenge überschreitet eine Energieschwelle.

3. Verfahren gemäß Anspruch 1 oder 2, wobei, wenn der Sollantriebswert von einem Wert unterhalb der Verbrennungskraftmaschine-Schwelle (71) auf einen Wert oberhalb der Verbrennungskraftmaschine-Schwelle (71) erhöht wird, das Steuern der Antriebseinrichtung bei Auswahl des leistungsorientierten Modus aufweist:
Wechseln von dem parallelen Hybridbetrieb in den seriellen Hybridbetrieb, ohne das Erfüllen des Kriteriums abzuwarten.

4. Verfahren gemäß einem der vorangehenden Ansprüche,
wobei das Verfahren bei Auswahl des leistungsorientierten Modus im Falle einer zweiten Bedingung aufweist:
Steuern der Antriebseinrichtung in dem seriellen Hybridbetrieb, bis ein anderes Kriterium erfüllt ist, das von der Zeitdauer und/oder dem Energieumsatz eines simulierten Betreibens in dem parallelen Boost-Hybridbetrieb abhängt, und
falls das andere Kriterium erfüllt ist, Wechseln in den parallelen Boost-Hybridbetrieb, wobei das Verfahren bei Auswahl des verbrauchsorientierten Modus im Falle der zweiten Bedingung aufweist:
Steuern der Antriebseinrichtung in dem parallelen Boost-Hybridbetrieb, ohne das Erfüllen des anderen Kriteriums abzuwarten,
wobei die zweite Bedingung aufweist, dass der Sollantriebswert auf den Zwischenwert erniedrigt wird.

5. Verfahren gemäß dem vorangehenden Anspruch, wobei das andere Kriterium umfasst:
die Zeitdauer seit dem Erniedrigen des Sollantriebswertes auf den Zwischenwert überschreitet eine andere Zeitschwelle und/oder
eine simulierte aus dem Akkumulator (13, 213) während der Zeitdauer des simulierten Betreibens in dem parallelen Boost-Hybridbetrieb entnommene Energiemenge überschreitet eine andere Energieschwelle.

6. Verfahren gemäß Anspruch 4 oder 5, wobei, wenn der Sollantriebswert von einem Wert oberhalb der Parallelhybridbetrieb-Schwelle (69) auf einen Wert unterhalb der Parallelhybridbetrieb-Schwelle (69) erniedrigt wird, das Steuern der Antriebseinrichtung bei Auswahl des verbrauchsorientierten Modus aufweist:
Wechseln von dem seriellen Hybridbetrieb in den parallelen Boost-Hybridbetrieb, ohne das Erfüllen des anderen Kriteriums abzuwarten.

7. Verfahren gemäß einem der vorangehenden Ansprüche, ferner aufweisend:
Detektieren einer Fahrhebelstellung;
Bestimmen des Sollantriebswertes basierend auf der Fahrhebelstellung bei Auswahl des verbrauchsorientierten Modus in einem ersten Bereich (83) eines Fahrhebelweges als einen Wert, der größer als ein bei Auswahl des leistungsorientierten Modus bestimmter Sollantriebswert ist; und
Bestimmen des Sollantriebswertes basierend auf der Fahrhebelstellung bei Auswahl des verbrauchsorientierten Modus in einem zweiten Bereich (85) eines Fahrhebelweges als einen Wert, der kleiner als ein bei Auswahl des leistungsorientierten Modus bestimmter Sollantriebswert ist.

8. Verfahren gemäß dem vorangehenden Anspruch, ferner aufweisend:
Bestimmen des Sollantriebswertes basierend auf der Fahrhebelstellung bei Auswahl des leistungsorientierten Modus über den Fahrhebelweg als Produkt einer Gesamtsteigung und der Fahrhebelstellung entlang des Fahrhebelweges.

9. Verfahren gemäß dem vorangehenden Anspruch,
wobei das Bestimmen des Sollantriebswertes bei Auswahl des verbrauchsorientierten Modus aufweist:
Bestimmen des Sollantriebswertes in einem Anfangsbereich des Fahrhebelweges als Produkt einer Anfangssteigung und der Fahrhebelstellung, in einem Zwischenbereich des Fahrhebelweges als Produkt einer Zwischensteigung und der Fahrhebelstellung, und in einem Endbereich des Fahrhebelweges als Produkt einer Endsteigung und der Fahrhebelstellung, wobei die Gesamtsteigung verschieden von der Anfangssteigung, der Endsteigung und der Zwischensteigung ist.

10. Hybridfahrzeug mit einer Antriebseinrichtung (3, 203), die eine Verbrennungskraftmaschine (5, 205), eine erste Elektromaschine (9, 209), eine zweite Elektromaschine (11, 211) und einen Akkumulator (13, 213) umfasst, wobei die Antriebseinrichtung eine Auswahl aus einem leistungsorientierten Modus und einem verbrauchsorientierten Modus unterstützt, und mit einer Antriebseinrichtungssteuerung, die ausgebildet ist, ein Verfahren gemäß einem der vorangehenden Ansprüche auszuführen.

## Claims

1. A method for controlling a drive device (3, 203) of a hybrid vehicle (1, 201), which comprises an internal combustion engine (5 205), a first electric engine (9, 209) a second electric engine (11, 211) and an accumulator (13, 213), wherein a performance-oriented mode or a consumption-oriented mode can be selected for the drive device,
wherein the method for a selected consumption-oriented mode in the case of a first condition comprises:
Controlling the drive device in a parallel boost hybrid mode in which the internal combustion engine (5, 205) and additionally the first electric engine and/or the second electric engine brings about a drive torque, until a criterion is fulfilled, which depends on the time duration of the operation and/or the energy conversion in the parallel boost hybrid mode, and
in the event the criterion is fulfilled, switching to a serial hybrid mode, in which the drive torque is brought about by means of the second electric engine (11, 211) and the internal combustion engine (5, 205) drives the first electric engine (9, 209) for generating electrical energy,
wherein the method for the selected performance-oriented mode in the case of the first condition comprises:
Controlling the drive device in the serial hybrid mode, without having to wait for the fulfillment of the criterion,
wherein the first condition comprises:
A target drive value is increased to an intermediate value, which is between an internal combustion engine threshold (71), which represents a maximum drive value in a parallel hybrid mode, in which the internal combustion engine (5, 205) exclusively brings about a drive torque, and
a parallel hybrid mode threshold (69) which represents a maximum drive value in the parallel boost hybrid mode.

2. The method according to Claim 1 wherein the criterion comprises:
The time duration of the operation in the parallel boost hybrid mode exceeds the time threshold and/or
a quantity of energy removed from the accumulator (13, 213) during the time duration of the operation in the parallel boost hybrid mode exceeds an energy threshold.

3. The method according to Claim 1 or 2, wherein if the target drive value is increased from a value below the internal combustion engine threshold (71) to a value above the internal combustion engine threshold (71), the controlling of the drive device for selection of the performance-oriented mode comprises:
Switching from the parallel hybrid mode to the serial hybrid mode, without having to wait for the fulfillment of the criterion.

4. The method according to any one of the preceding claims,
wherein the method for selection of the performance-oriented mode in the case of a second condition comprises:
Controlling the drive device in the serial hybrid mode until another criterion is fulfilled which depends on the time duration and/or the energy conversion of a simulated operation in the parallel boost hybrid mode, and
in the event the other criterion is fulfilled switching to the parallel boost hybrid mode, wherein the method for selection of the consumption-oriented mode in the case of the second condition comprises:
Controlling the drive device in the parallel boost hybrid mode, without having to wait for the fulfilment of the other criterion,
wherein the second condition comprises that the target drive value is reduced to the intermediate value.

5. The method according to the preceding claims, wherein the other criterion comprises:
The time duration since the reduction of the target drive value to the intermediate value exceeds another time threshold and/or
a simulated quantity of energy removed from the accumulator (13, 213) during the time duration of the simulated operation in the parallel boost hybrid mode exceeds another energy threshold.

6. The method according to Claim 4 or 5, wherein if the target drive value is reduced from a value above the parallel hybrid mode threshold (69) to a value below the parallel hybrid mode threshold (69), the controlling of the drive device for selection of the consumption-oriented mode comprises:
Switching from the serial hybrid mode to the parallel boost hybrid mode, without having to wait for the fulfillment of the other criterion.

7. The method according to any one of the preceding claims, further comprising:
Detection of a drive lever position;
determination of the target drive value based on the drive lever position for selection of the consumption-oriented mode in a first region (83) of a drive lever path as a value which is greater than a target drive value determined for selection of the performance-oriented mode; and
determination of the target drive value based on the drive lever position for selection of the consumption-oriented mode in a second region (85) of a drive lever path as a value which is smaller than a target drive value determined for selection of the performance-oriented mode.

8. The method according to the preceding claim, further comprising:
Determination of the target drive value based on the drive lever position for selection of the performance-oriented mode over the drive lever path as a product of an overall slope and the drive lever position along the drive lever path.

9. The method according to the preceding claim,
wherein the determination of the target drive value when selecting the consumption-oriented mode comprises:
Determination of the target drive value in an initial region of the drive lever path as a product of an initial slope and the drive lever position, in an intermediate region of the drive lever path as a product of an intermediate slope and the drive lever position, and in an end region of the drive lever path as a product of an end slope and the drive lever position, wherein the overall slope is different from the initial slope, the end slope and the intermediate slope.

10. A hybrid vehicle with a drive device (3, 203), which comprises an internal combustion engine (5, 205), a first electric engine (9, 209), a second electric engine (11, 211) and an accumulator (13, 213), wherein the drive device assists a selection from a performance-oriented mode and a consumption-oriented mode, and with a drive device controller, which is designed, to implement a method according to any one of the preceding claims.

## Revendications

1. Procédé pour le contrôle d'un dispositif d'entraînement (3, 203) d'un véhicule hybride (1, 201), qui comprend un moteur à combustion (5, 205), un premier moteur électrique (9, 209), un deuxième moteur électrique (11, 211) et un accumulateur (13, 213), un mode orienté puissance ou un mode orienté consommation pouvant être sélectionné pour le dispositif d'entraînement,
le procédé comprenant, lorsque le mode orienté consommation est sélectionné, dans le cas d'une première condition :
le contrôle du dispositif d'entraînement dans un fonctionnement hybride boost parallèle, dans lequel le moteur à combustion (5, 205) et en outre le premier moteur électrique et/ou le deuxième moteur électrique génère un couple d'entraînement de conduite jusqu'à ce qu'un critère soit respecté qui dépend de la durée de fonctionnement et/ou de conversion d'énergie dans le fonctionnement hybride boost parallèle et
si le critère est respecté, passage à un fonctionnement hybride sériel, dans lequel le couple d'entraînement de conduite est généré au moyen du deuxième moteur électrique (11, 211) et le moteur à combustion (5, 205) entraîne le premier moteur électrique (9, 209) pour la production d'énergie électrique,
le procédé comprenant, lorsque le mode orienté puissance est sélectionné, dans le cas de la première condition :
contrôle du dispositif d'entraînement dans le fonctionnement hybride sériel, sans attendre le respect du critère,
la première condition comprenant :
une valeur d'entraînement de consigne est augmentée jusqu'à une valeur intermédiaire qui se trouve entre
un seuil de moteur à combustion (71) qui représente une valeur d'entraînement maximale dans un fonctionnement hybride parallèle, dans lequel c'est exclusivement le moteur à combustion (5, 205) qui génère un couple d'entraînement de conduite et
un seuil de fonctionnement hybride parallèle (69) qui représente une valeur d'entraînement maximale dans le fonctionnement hybride boost parallèle.

2. Procédé selon la revendication 1, le critère comprenant :
la durée du fonctionnement dans le mode hybride boost dépasse un seuil de temps et/ou
une quantité d'énergie prélevée dans l'accumulateur (13, 213) pendant la durée de fonctionnement dans le mode hybride boost dépasse un seuil d'énergie.

3. Procédé selon la revendication 1 ou 2, moyennant quoi, lorsque la valeur d'entraînement de consigne est augmentée d'une valeur inférieure au seuil de moteur à combustion (71) à une valeur supérieure au seuil de moteur à combustion (71), le contrôle du dispositif d'entraînement comprend, lors de la sélection du mode orienté puissance :
le passage du fonctionnement hybride parallèle au fonctionnement hybride sériel, sans attendre le respect du critère.

4. Procédé selon l'une des revendications précédentes,
le procédé comprenant, lors de la sélection du mode orienté puissance dans le cas d'une deuxième condition :
le contrôle du dispositif d'entraînement dans le fonctionnement hybride sériel, jusqu'à ce qu'un autre critère soit respecté, qui dépend de la durée et/ou de la conversion d'énergie d'un fonctionnement simulé dans le fonctionnement hybride boost parallèle et
si l'autre critère est respecté, passage au fonctionnement hybride boost parallèle, le procédé comprenant, lors de la sélection du mode orienté consommation dans le cas de la deuxième condition :
le contrôle du dispositif d'entraînement dans le fonctionnement hybride boost parallèle sans attendre le respect de l'autre critère,
la deuxième condition comprenant que la valeur d'entraînement de consigne est réduite à la valeur intermédiaire.

5. Procédé selon la revendication précédente, l'autre critère comprenant :
la durée depuis la réduction de la valeur d'entraînement de consigne à la valeur intermédiaire dépasse un autre seuil de temps et/ou
une quantité d'énergie simulée prélevée dans l'accumulateur (13, 213) pendant la durée du fonctionnement simulé dans le monde hybride boost dépasse un autre seuil d'énergie.

6. Procédé selon la revendication 4 ou 5, moyennant quoi, lorsque la valeur d'entraînement de consigne est réduite d'une valeur supérieure au seuil de fonctionnement hybride parallèle (69) à une valeur inférieure au seuil de fonctionnement hybride parallèle (69), le contrôle du dispositif d'entraînement comprend, lors de la sélection du mode orienté consommation :
le passage du fonctionnement hybride sériel au fonctionnement hybride boost parallèle sans attendre le respect de l'autre critère.

7. Procédé selon l'une des revendications précédentes, comprenant en outre :
la détection d'une position de levier de conduite ;
la détermination de la valeur d'entraînement de consigne sur la base de la position de levier de conduite lors de la sélection du mode orienté consommation dans une première partie (83) d'un trajet de levier de conduite comme étant une valeur supérieure à une valeur d'entraînement de consigne déterminée lors de la sélection du mode orienté puissance ; et
la détermination de la valeur d'entraînement de consigne sur la base de la position de levier de conduite lors de la sélection du mode orienté consommation dans une deuxième partie (85) d'un trajet de levier de conduite comme étant une valeur inférieure à une valeur d'entraînement de consigne déterminée lors de la sélection du mode orienté puissance.

8. Procédé selon la revendication précédente, comprenant en outre :
la détermination de la valeur d'entraînement de consigne sur la base de la position du levier de conduite lors de la sélection du mode orienté puissance sur le trajet du levier de conduite en tant que produit d'une pente totale et de la position du levier de conduite le long du trajet du levier de conduite.

9. Procédé selon la revendication précédente,
la détermination de la valeur d'entraînement de consigne lors de la sélection du mode orienté consommation comprend :
la détermination de la valeur d'entraînement de consigne dans une partie initiale du trajet du levier de conduite en tant que produit d'une pente initiale et de la position du levier de conduite, dans une partie intermédiaire du trajet du levier de conduite en tant que produit d'une pente intermédiaire et de la position du levier de conduite, et dans une partie finale du trajet du levier de conduite, en tant que produit d'une pente finale et de la position du levier de conduite, la pente totale étant différente de la pente initiale, de la pente finale et de la pente intermédiaire.

10. Véhicule hybride avec un dispositif d'entraînement (3, 203), qui comprend un moteur à combustion (5, 205), un premier moteur électrique (9, 209), un deuxième moteur électrique (11, 211) et un accumulateur (13, 213), le dispositif d'entraînement favorisant une sélection parmi un mode orienté puissance et un mode orienté consommation, et avec une commande de dispositif d'entraînement qui est conçue pour exécuter un procédé selon l'une des revendications précédentes.
